# EUROPÄISCHE PATENTSCHRIFT

(11) **EP 1 710 882 B1**
(45) Veröffentlichungstag und Bekanntmachung des Hinweises auf die Patenterteilung: **11.01.2017**
(21) Anmeldenummer: 06006501.8
(22) Anmeldetag: 29.03.2006
(51) Int. Cl.: H02G 3/22

(54) **Kabeldurchführung und Kabeldurchführungssystem**
Cable feed-through and cable feed-through system
Dispositif pour traversée de câble et système pour traversée de câble

(30) Priorität: 08.04.2005 DE 102005017689
(43) Veröffentlichungstag der Anmeldung: 11.10.2006
(60) Teilanmeldung: 10173405.1
(73) Patentinhaber: Lapp Engineering & Co., 6330 Cham (CH)
(72) Erfinder: Drotleff, Rolf, 71263 Weil der Stadt (DE); Zankl, Martin, 71364 Winnenden (DE)
(74) Vertreter: Hoeger, Stellrecht & Partner Patentanwälte mbB

(56) Entgegenhaltungen:
- WO-A-99/56368
- DE-A1- 10 140 714
- US-A- 5 545 854

## Beschreibung

Die Erfindung betrifft eine Kabeldurchführung mit einem mindestens einen Kabeldurchführungskanal aufweisenden elastischen Dichtelement, das aus zwei durch eine Trennfläche getrennten Dichtelementteilen zusammengesetzt ist und einen den mindestens einen Kabeldurchführungskanal umfassenden Durchführungskörper aufweist, der an mindestens einem Kabelmantel dichtend anlegbare Innendichtflächen umfasst, mit mindestens einem Halteelement, mit welchem die beiden Dichtelementteile derart beaufschlagbar sind, dass die Innendichtflächen am Kabelmantel und die Dichtelementteile mit ihren jeweils an die Trennfläche angrenzenden Anlageflächen aneinander dichtend anliegen.

Derartige Kabeldurchführungen sind aus der US 5,545,854 bekannt, wobei bei diesen stets das Problem der einfachen Montage bei zuverlässiger äußerer Abdichtung besteht.

Aus der WO 99/56368 sind außerdem Kabeldurchführungen bekannt, die über äußere Flächen miteinander verbindbar sind.

Aus der DE-A101 40 714 sind Kabeldurchführungen mit mehrteiligen ineinandersitzenden Dichtelementen bekannt.

Der Erfindung liegt die Aufgabe zugrunde, eine Kabeldurchführung der eingangs genannten Art derart zu verbessern, dass sie einerseits leicht montierbar ist und andererseits eine zuverlässige Abdichtung gewährleistet.

Diese Aufgabe wird bei einer Kabeldurchführung der eingangs beschriebenen Art erfindungsgemäß dadurch gelöst, dass das mindestens eine Halteelement eine Außenkontur und somit als Mantelflächen eines im Querschnitt rechteckförmigen oder quadratischen Körpers ausgebildete Stützflächen umfasst,
dass das elastische Dichtelement mit einer Außendichtfläche für die Kabeldurchführung versehen ist, und dass die Außendichtfläche des Dichtelements im unbeaufschlagten Zustand der Kabeldurchführung über die Stützflächen des mindestens einen Halteelements übersteht.

Der Vorteil der erfindungsgemäßen Lösung ist darin zu sehen, dass durch die vollständige Trennung des Dichtelements in zwei Dichtelementteile längs der Trennebene die Möglichkeit besteht, ein Kabel in den dadurch ebenfalls durch die Trennebene geteilten Kabeldurchführungskanal auch als vorkonfektioniertes Kabel einzulegen und in dem Kabeldurchführungskanal dann durch Aneinanderanlegen der Dichtelementteile und Beaufschlagen derselben durch die Halteteile das Kabel dicht abgeschlossen aufzunehmen.

Da erfindungsgemäß das elastische Dichtelement mit einer Außendichtfläche für die Kabeldurchführung versehen ist, stellt dieses somit nicht nur die Abdichtung zum Kabel her, sondern ist außerdem in der Lage, eine Außendichtfläche der Kabeldurchführung zur Verfügung zu stellen, um diese dicht abschließend einbauen zu können.

Ferner steht erfindungsgemäß die Außendichtfläche des Dichtelements im unbeaufschlagten Zustand der Kabeldurchführung über Stützflächen des mindestens einen Halteelements übersteht, so dass damit in besonders einfacher Weise die Möglichkeit geschaffen ist, einerseits die Kabeldurchführung an den Stützflächen zusätzlich zu fixieren, andererseits aber auch eine ausreichend gute Abdichtung im Bereich der Außendichtfläche zu erreichen.

Hinsichtlich der Ausbildung der Halteelemente selbst wurden im Zusammenhang mit der vorstehenden Erläuterung der erfindungsgemäßen Lösung keine näheren Angaben gemacht.

So ist es besonders günstig, wenn das Halteelement ebenfalls aus zwei Halteelementteilen ausgebildet ist, so dass auch das Halteelement selbst zusammengesetzt werden kann und somit bei der Montage der Kabeldurchführung an einem bereits konfektionierten Kabel keine Probleme bereitet.

Besonders günstig ist es dabei, wenn eine die Halteelementteile trennende Trennfläche mit der Trennfläche der Dichtelementteile zusammenfällt.

Um die beiden Halteelementteile miteinander zu verbinden, sind die unterschiedlichsten Möglichkeiten denkbar.

Beispielsweise wäre es denkbar, die Halteelementteile stoffschlüssig miteinander zu verbinden.

Eine besonders günstige Verbindung, die insbesondere auch lösbar ist, sieht vor, dass die Halteelementteile kraftschlüssig miteinander verbunden werden.

Hinsichtlich der Montage hat es sich als besonders zweckmäßig erwiesen, wenn die Halteelementteile durch Formschluss miteinander verbindbar sind.

Eine besonders vorteilhafte Ausführungsform eines derartigen Formschlusses sieht vor, dass die Halteelementteile mittels einer Rastverbindung miteinander verbindbar sind.

Um die Halteelemente besonders einfach und kostengünstig aufzubauen, hat es sich als zweckmäßig erwiesen, wenn die Halteelementteile eines Halteelements spiegelsymmetrisch zu einer Mittelachse des Halteelements, welche insbesondere auch Mittelachse des Kabeldurchführungskanals ist, ausgebildet sind.

In diesem Fall besteht die Möglichkeit, die Halteelemente aus zwei identischen Halteelementteilen aufzubauen. die zu dem Halteelement zusammengesetzt werden können.

Zweckmäßigerweise ist dabei die Mittelachse so gelegt, dass sie in der Trennfläche liegt.

Eine andere günstige Ausbildung der Halteelementteile sieht vor, dass die Halteelementteile spiegelsymmetrisch zu einer Querachse ausgebildet sind, wobei die Querachse vorzugsweise senkrecht zu der Mittelachse des Halteelements ausgebildet ist.

Zweckmäßigerweise liegt dabei die Querachse in der Trennfläche.

Hinsichtlich der Verbindung der Halteelementteile und der Dichtelementteile wurden bislang keine näheren Angaben gemacht.

Prinzipiell können diese Teile separate Teile sein, die bei der Montage der Kabeldurchführung zusammengesetzt werden.

Es hat sich jedoch als besonders vorteilhaft erwiesen, wenn mindestens ein Halteelementteil mit einem Dichtelementteil zu einem Kabeldurchführungsteil verbunden ist.

Eine derartige Lösung hat den Vorteil, dass die Halteelementteile und die Dichtelementteile nicht als einzelne Teile zusammengesetzt werden müssen, sondern dass zwei Kabeldurchführungsteile als zwei Einheiten zusammengesetzt werden können.

Hinsichtlich der Verbindung des mindestens einen Halteelementteils mit dem Dichtelementteil sind die unterschiedlichsten Lösungen denkbar. Beispielsweise wäre es denkbar, die beiden formschlüssig zu verbinden.

Eine besonders günstige Lösung sieht vor, dass das mindestens eine Halteelementteil mit dem Dichtelementteil stoffschlüssig verbunden ist.

Eine besonders günstige Realisierung einer derartigen stoffschlüssigen Verbindung sieht vor, dass das Dichtelementteil an das mindestens eine Halteelementteil angespritzt oder angegossen ist.

Prinzipiell könnte das Halteelement so ausgebildet sein, dass dieses insgesamt auf das Dichtelement wirkt.

Eine zweckmäßige Lösung sieht dabei vor, dass das Halteelement zwei Halteelementkörper aufweist, die auf das Dichtelement einwirken.

Eine konstruktiv besonders günstige Lösung sieht jedoch vor, dass das Halteelement mindestens auf einen Abschnitt des Durchführungskörpers wirkt.

Im Zusammenhang mit der bisherigen Erläuterung war stets von mindestens einem Halteelement die Rede, welches auf die Dichtelementteile wirkt.

Eine besonders günstige Lösung sieht vor, dass die Dichtelementteile durch zwei Halteelemente beaufschlagbar sind.

Besonders günstig ist es dabei, wenn auf zwei im Abstand voneinander angeordnete Abschnitte des Durchführungskörpers jeweils ein Halteelement wirkt.

Um die erfindungsgemäße Kabeldurchführung in geeigneter Weise in einer Aufnahme aufnehmen zu können, ist vorzugsweise vorgesehen, dass das mindestens eine Halteelement Stützflächen für eine Aufnahme der Kabeldurchführung bildet.

Mit derartigen, an dem mindestens einen Halteelement vorgesehenen Stützflächen besteht somit die Möglichkeit, die Kabeldurchführung insgesamt an einem Gehäuse oder in einer Aufnahme zu fixieren.

Die Stützflächen können dabei an beliebiger Stelle des Halteelements angeordnet sein. Als besonders zweckmäßig hat es sich erwiesen, wenn die Stützflächen an einer Mantelkontur des mindestens einen Halteelements angeordnet sind.

Unter einer Mantelkontur ist dabei die Kontur des Halteelements zu verstehen, die bezogen auf die Mittelachse einen Mantel, das heißt eine die Mittelachse mantelförmig umgebende Kontur, bildet.

Hinsichtlich der Abdichtung der Kabeldurchführung nach außen wurden bislang keine näheren Angaben gemacht.

Prinzipiell wäre es denkbar, die Kabeldurchführung außen mit einem separaten Dichtelement zu versehen.

Zweckmäßigerweise ist die Außendichtfläche so aufgebaut, dass diese um das elastische Dichtelement geschlossen umläuft, wobei insbesondere die Außendichtfläche geschlossen um eine Mittelachse der Kabeldurchführung umläuft, die insbesondere auch eine Mittelachse des Kabeldurchführungskanals sowie des Dichtelements und des mindestens einen Halteteils ist.

Um die Außendichtfläche in geeigneter Weise an dem Dichtelement anzuordnen, ist vorzugsweise vorgesehen, dass die Außendichtfläche auf einem an die Durchführungskörper angeformten Dichtflächenträger angeordnet ist.

Zweckmäßigerweise ist dabei der Dichtflächenträger so ausgebildet, dass dieser in radialer Richtung zum Kabeldurchführungskanal außenliegend gegenüber dem Durchführungskörper verläuft und somit in einfacher Weise die Möglichkeit schafft, eine Außendichtfläche an geeigneter Stelle der Kabeldurchführung anzuordnen.

Eine besonders günstige Lösung sieht vor, dass der Dichtflächenträger mit einem die Außendichtfläche tragenden Außenabschnitt in radialer Richtung zum Kabeldurchführungskanal über das mindestens eine Halteteil übersteht, so dass eine günstige Konstellation vorliegt, die es erlaubt, die Außendichtfläche mit der notwendigen Dichtpressung zu beaufschlagen und somit zu deformieren.

Um die Konturen des mindestens einen Halteelements und der Außendichtfläche aneinander anzupassen, ist zweckmäßigerweise vorgesehen, dass das mindestens eine Halteelement eine Außenkontur aufweist, die der der Außendichtfläche des Dichtelements angepasst ist.

Eine aufgrund ihrer Symmetrie besonders vorteilhafte Konstruktion sieht vor, dass der Dichtflächenträger zwischen zwei Stützflächen angeordnet ist, so dass beiderseits des Dichtflächenträgers eine Abstützung des Halteelements oder der Halteelemente erfolgen kann.

Somit erlaubt eine derartige Anordnung der Halteelemente auch eine geeignete zusätzliche Abstützung der Kabeldurchführung beiderseits der vom Dichtflächenträger getragenen Außendichtfläche.

Hinsichtlich der Anordnung der Innendichtflächen wurden bislang keine näheren Angaben gemacht. So sieht eine besonders günstige Lösung vor, dass das Dichtelement an dem Kabelmantel anlegbare Innendichtflächen tragende Dichtringe umfasst.

Um eine gute Abdichtung im Bereich des Kabels zu erreichen, ist es besonders zweckmäßig, wenn das Dichtelement mehrere im Abstand voneinander angeordnete Dichtringe umfasst.

Vorzugsweise sind dabei die Dichtringe in Richtung der Mittelachse aufeinanderfolgend und im Abstand voneinander angeordnet und umschließen das durch den Kabeldurchführungskanal hindurchgeführte Kabel.

Eine andere vorteilhafte Lösung einer erfindungsgemäßen Kabeldurchführung sieht vor, dass die Dichtelementteile ineinandergreifende Vertiefungen und/oder Vorsprünge aufweisen. Damit ist in einfacher Weise im Bereich der Dichtelementteile dann, wenn diese zu dem Dichtelement zusammengesetzt werden sollen, eine gute Abdichtung realisierbar.

Besonders vorteilhaft hat sich eine Lösung erwiesen, bei der jedes der Dichtelementteile mindestens eine Vertiefung und mindestens einen Vorsprung aufweist.

Bei der konstruktiven Realisierung der Dichtelementteile ist es dabei besonders vorteilhaft, wenn diese so ausgebildet werden, dass ein Dichtelementteil und ein identisches, um eine Querachse um 180° gedrehtes Dichtelementteil zusammengesetzt werden können, wobei jeweils der Vorsprung eines Dichtelementteils in die Vertiefung des anderen Dichtelementteils eingreift.

Um insbesondere im Bereich der Trennfläche eine gute Abdichtung zwischen den zu dem Dichtelement zusammengesetzten Dichtelementteilen zu erhalten, ist vorzugsweise vorgesehen, dass die Dichtelementteile so ausgebildet sind, dass deren Zusammensetzen zu dem Dichtelement zu einer Deformation des die Dichtelementteile bildenden elastischen Materials führt, so dass im Bereich der Trennfläche eine Kraftbeaufschlagung entsteht, die zu einer die Abdichtung verbessernden Flächenpressung zwischen den Dichtelementteilen führt.

Hinsichtlich eines möglichst optimalen und kostengünstigen Aufbaus der erfindungsgemäßen Kabeldurchführung hat es sich als besonders vorteilhaft erwiesen, wenn jedes Halteelement aus identischen Halteelementteilen zusammengesetzt ist.

Bei zwei vorgesehenen Halteelementen hat es sich als vorteilhaft erwiesen, wenn beide Halteelemente der Kabeldurchführung aus identischen Halteelementteilen zusammengesetzt sind, so dass vier identische Halteelementteile verwendet werden können, um zwei Halteelemente zusammenzusetzen.

Ferner ist es vorteilhafterweise ebenfalls vorgesehen, dass die Dichtelementteile identisch ausgebildet sind.

Eine besonders zweckmäßige Lösung sieht vor, dass die Kabeldurchführungsteile identisch ausgebildet sind, so dass sich eine erfindungsgemäße Kabeldurchführung aus zwei identisch ausgebildeten Kabeldurchführungsteilen zusammensetzen lässt.

Des weiteren wird die erfindungsgemäße Aufgabe von einem Kabeldurchführungssystem gelöst, welches einen Rahmen umfasst, in dem mindestens eine Kabeldurchführung nach einem der voranstehenden Ansprüche eingesetzt ist, die mit ihrer Außendichtfläche zumindest teilweise am Rahmen abdichtend anliegt.

Ein derartiges Kabeldurchführungssystem eignet sich besonders vorteilhaft zur Abdichtung von in Geräten oder Maschinen eingeführten Kabeln.

Dabei ist es besonders zweckmäßig, wenn in den Rahmen mehrere Kabeldurchführungen eingesetzt sind.

Die Abdichtung erfolgt dabei vorzugsweise so, dass mindestens eine der Kabeldurchführungen mit ihrer Außendichtfläche zum Teil an dem Rahmen und zum Teil an Außendichtflächen von anderen der Kabeldurchführungen anliegt.

Zweckmäßigerweise sind bei mehreren in ein derartiges Kabeldurchführungssystem eingesetzten Kabeldurchführungen die Trennflächen nebeneinanderliegender Kabeldurchführungen so ausgerichtet, dass sie quer zueinander verlaufen.

Eine hinsichtlich einer zuverlässigen Positionierung der Kabeldurchführungen in dem Rahmen besonders günstige Lösung sieht vor, dass die mindestens eine Kabeldurchführung mit einem in eine Positionieröffnung eingreifenden Positioniervorsprung in dem Rahmen positionsfest fixierbar ist. Damit besteht die Möglichkeit, Kabeldurchführungen in den Rahmen definiert einzusetzen, obwohl diese durch die übrigen, diese umgebenden Kabeldurchführungen noch nicht zuverlässig in dem diesen zugedachten Platz festgelegt sind.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Figur 1: eine perspektivische Ansicht eines ersten Ausführungsbeispiels einer erfindungsgemäßen Kabeldurchführung;
- Figur 2: eine perspektivische Ansicht in Richtung des Pfeils A in Figur 1;
- Figur 3: eine vergrößerte Darstellung eines Kabeldurchführungsteils;
- Figur 4: eine perspektivische Darstellung eines in einer erfindungsgemäßen Kabeldurchführung angeordneten Kabels;
- Figur 5: eine perspektivische Ansicht ähnlich Figur 2 eines zweiten Ausführungsbeispiels einer erfindungsgemäßen Kabeldurchführung;
- Figur 6: eine perspektivische Darstellung eines Halteelementteils des zweiten Ausführungsbeispiels der erfindungsgemäßen Kabeldurchführung ohne das durch das Halteelementteil gehaltene Dichtelementteil;
- Figur 7: eine perspektivische Darstellung ähnlich Figur 3 des Halteelementteils des zweiten Ausführungsbeispiels mitsamt dem Dichtelementteil;
- Figur 8: eine perspektivische Darstellung des Dichtelementteils gemäß Figur 7 ohne das entsprechende Halteelementteil;
- Figur 9: eine perspektivische Darstellung ähnlich Figur 2 eines dritten Ausführungsbeispiels einer erfindungsgemäßen Kabeldurchführung;
- Figur 10: eine perspektivische Darstellung des Kabeldurchführungsteils eines dritten Ausführungsbeispiels einer erfindungsgemäßen Kabeldurchführung;
- Figur 11: eine perspektivische Darstellung eines Halteelementteils des dritten Ausführungsbeispiels ohne das Dichtelementteil;

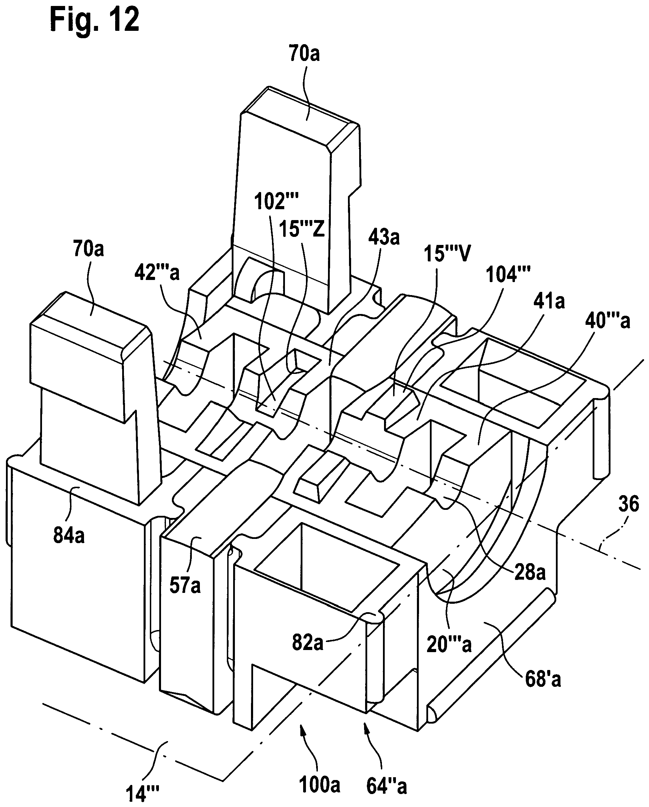

- Figur 12: eine perspektivische Darstellung ähnlich Figur 10 eines Kabeldurchführungsteils eines vierten Ausführungsbeispiels einer erfindungsgemäßen Kabeldurchführung;
- Figur 13: eine perspektivische Darstellung eines ersten Ausführungsbeispiels eines erfindungsgemäßen Kabeldurchführungssystems mit mehreren Kabeldurchführungen gemäß den Figuren 1 bis 4 oder den Figuren 5 bis 8;
- Figur 14: eine Draufsicht in Richtung des Pfeils B in Figur 13;
- Figur 15: einen Schnitt längs Linie 15-15 in Figur 14;
- Figur 16: eine perspektivische Darstellung eines zweiten Ausführungsbeispiels eines erfindungsgemäßen Kabeldurchführungssystems mit einer von mehreren Kabeldurchführungen gemäß Figuren 9 bis 11 oder Figur 12;
- Figur 17: eine perspektivische Darstellung eines fünften Ausführungsbeispiels einer erfindungsgemäßen Kabeldurchführung für große Kabel für das zweite Ausführungsbeispiel des erfindungsgemäßen Kabeldurchführungssystems;
- Figur 18: eine perspektivische Darstellung einer Blinddurchführung für ein erfindungsgemäßes Kabeldurchführungssystem, insbesondere gemäß dem zweiten Ausführungsbeispiel und
- Figur 19: ein sechstes Ausführungsbeispiel einer erfindungsgemäßen Kabeldurchführung.

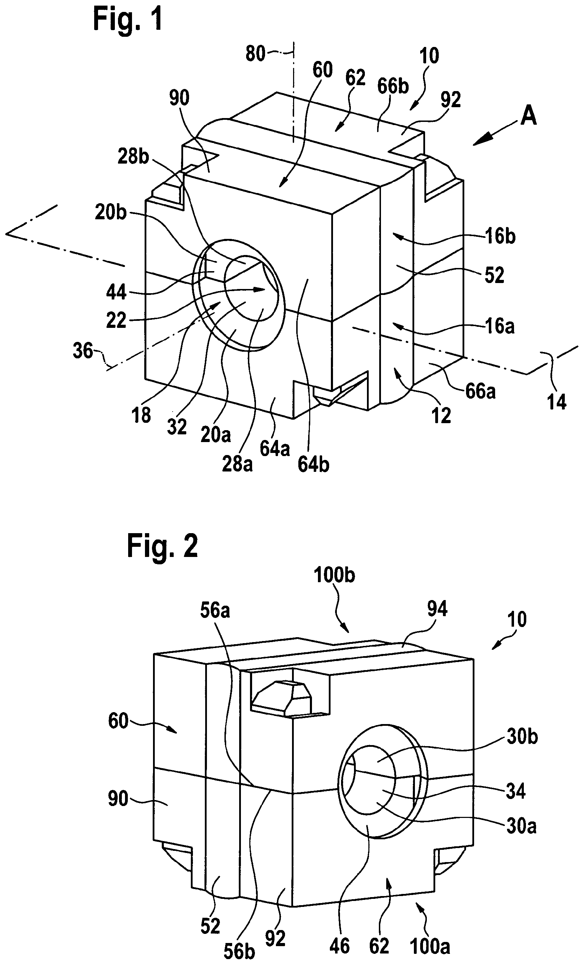

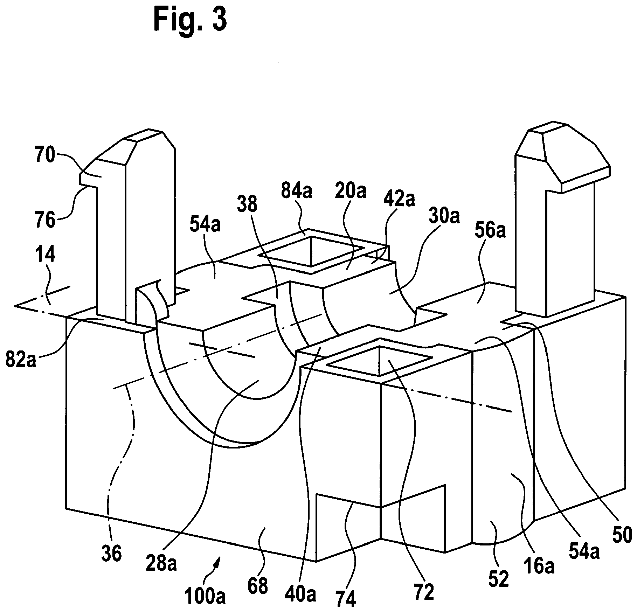

Ein Ausführungsbeispiel einer erfindungsgemäßen, als Ganzes mit 10 bezeichneten Kabeldurchführung, dargestellt in Figur 1 bis 3, umfasst ein Dichtelement 12, welches aus längs einer Trennebene ausgebildeten Trennfläche 14 getrennten und in Figur 3 dargestellten Dichtelementteilen 16a, 16b gebildet ist, wobei das Dichtelement 12 einen Durchführungskörper 18 umfasst, der seinerseits aus Durchführungskörperteilen 20a, 20b gebildet ist.

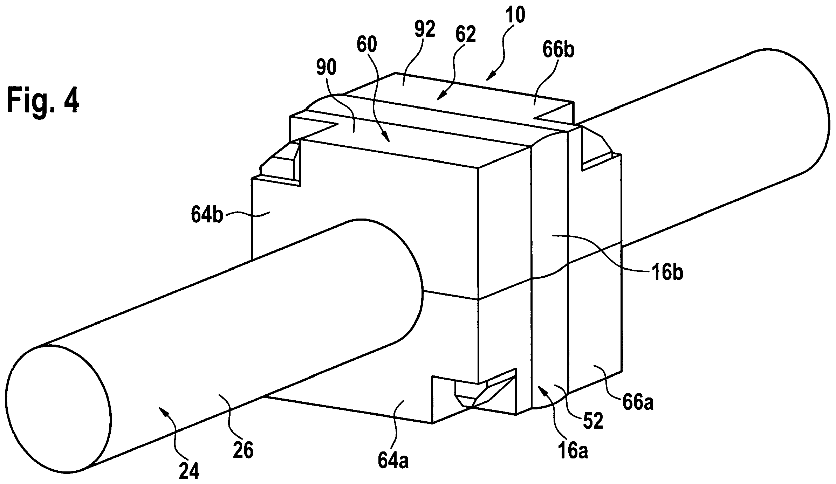

Der Durchführungskörper 18 bildet dabei einen Kabeldurchführungskanal 22 für die Durchführung eines Kabels 24, wie in Figur 4 dargestellt, wobei ein Kabelmantel 26 von dem Durchführungskörper 18 durch Innendichtflächenbereiche 28a, 28b und 30a, 30b beaufschlagt ist, die sich bei den zu dem Dichtelement 12 zusammengesetzten Dichtelementteilen 16a, 16b zu einer rings um den Kabelmantel 26 umlaufenden Innendichtfläche 32 bzw. 34 ergänzen.

Die Innendichtflächenbereiche 28a, 28b bzw. 30a, 30b sind in Richtung einer Mittelachse 36 des Kabeldurchführungskanals 22 aufeinanderfolgend und im Abstand voneinander angeordnet und durch eine zwischen diesen liegende ebenfalls ringförmig um den Kabelmantel 26 umlaufende Vertiefung 38 getrennt, so dass jedes der Durchführungskörperteile 20a, b die Innendichtflächenbereiche 28a bzw. 30a tragende und durch die Vertiefung 38 getrennte Dichtringsegmente 40a bzw. 42a aufweist, die sich jeweils zu einem die umlaufende Innendichtfläche 32 bzw. 34 tragenden Dichtring 44 bzw. 46 ergänzen.

Durch die Vertiefung 38 hat das die Dichtringe 44 bzw. 46 bildende Material bei Beaufschlagung des Kabelmantels 26 die Möglichkeit, in Richtung der Mittelachse 36 durch Deformation auszuweichen.

Darüber hinaus umfasst jedes Dichtelement 12 einen radial zur Mittelachse 36 über den Durchführungskörper 18 überstehenden Dichtflächenträger 50, welcher eine rings um den Durchführungskörper 18 umlaufende Außendichtfläche 52 trägt, wobei auch der Dichtflächenträger 50 aus zwei, den jeweiligen Durchführungskörperteilen 20a, b des Durchführungskörpers 18 zugeordneten Dichtflächenträgerteilen 54a, 54b gebildet ist.

Bei jedem der Dichtelementteile 16a, b verlaufen sowohl die Durchführungskörperteile 20a, b mit den Dichtringsegmenten 40a, b sowie 42a, b sowie auch die Dichtflächenträgerteile 54a, b bis zu einer sich über das ganze Dichtelementteil 16a, 16b erstreckenden jeweiligen Anlagefläche 56a, b, die an die Trennebene 14 angrenzt und mit welcher die Dichtelementteile 16a, b dicht abschließend aneinander anlegbar sind.

Um die Dichtelementteile 16a, b im Bereich ihrer Anlageflächen 56a, b aneinander dichtend anlegen zu können, sind jedem Dichtelement 12 zwei Halteelemente 60, 62 zugeordnet, die selbst jeweils aus Halteelementteilen 64a, 64b sowie 66a, 66b gebildet sind und sich ebenfalls bis zur Trennebene 14 erstrecken.

Jedes der Halteelementteile 64a, b bzw. 66a, b umfasst einen an den Durchführungskörperteilen 20a, 20b jeweils in einem nahe der Dichtringsegmente 40a, b bzw. 42a, b anliegenden Halteelementkörper 68 wobei jeder Halteelementkörper 68 auf einer Seite der Mittelachse 36 mit einem Rastfinger 70 und auf der gegenüberliegenden Seite mit einer Rastfingeraufnahme 72 versehen ist, wobei die Rastfingeraufnahme 72 beispielsweise als Kanal ausgebildet ist, mit dessen der Trennebene 14 gegenüberliegenden Endflächen 74 die Rastnase 76 des Rastfingers 70 verrastbar ist.

Dabei sind die jeweils miteinander zu einem Halteelement 60 bzw. 62 zu verbindenden Halteelementteile 64a, b bzw. 66a, b spiegelsymmetrisch zur Mittelachse 36 des Durchführungskörpers 18 als Spiegelachse ausgebildet.

Außerdem sind die Halteelemente 60, 62 spiegelsymmetrisch zu einer Spiegelachse 80 angeordnet, welche senkrecht auf der Trennebene 14 steht und mittig zwischen den Halteelementen 60, 62 verläuft, so dass insgesamt beide Halteelemente 60, 62 aus identischen Teilen aufgebaut werden können und jedes der Halteelemente 60, 62 aus identischen Halteelementteilen 64a, b bzw. 66a, b ausgebildet ist, so dass insgesamt zwei Halteelemente 60, 62 aus vier identischen Halteelementteilen 64 oder 66 gebildet werden können.

Auch die Halteelementeile 64a, b bzw. 66a, b sind so geformt, dass sich diese bis zu der Trennebene 14 erstrecken und mit ihren an die Trennebene 14 angrenzenden Halteelementflächen 82a, 82b bzw. 84a, 84b an die Trennebene 14 angrenzen und damit jeweils aneinander abstützbar sind.

Jedes der Halteelemente 60, 62 ist ferner noch mit auf seiner Außenseite angeordneten rings um den jeweiligen Bereich des Dichtelements 12 und somit rings um die Mittelachse 36 umlaufenden Stützflächen 90 bzw. 92 versehen, über welche der Dichtflächenträger 50 des Dichtelements 12 mit einem die Außendichtfläche 52 tragenden Außenabschnitt 94 übersteht.

Vorzugsweise wird die erfindungsgemäße Kabeldurchführung 10 aus zwei Kabeldurchführungsteilen 100a, b zusammengesetzt, die identisch ausgebildet sind, wobei eines der Kabeldurchführungsteile 100 wie in Figur 3 dargestellt aufgebaut ist und ein Dichtelementteil 16a sowie zwei Halteelementteile 64a und 66a umfasst, wobei das Dichtelementteil 16 an die Halteelementteile 64a, 66a angespritzt ist, so dass die Halteelementteile 64a und 66a mit dem Dichtelementteil 16a eine miteinander fest und formschlüssig verbundene Einheit bilden.

Nach Einlegen des Kabels 24, das bereits konfektioniert, d.h. mit endseitigen Anschlüssen versehen, sein kann, in den im Durchführungskörperteil 20a verlaufenden Teil des Kabeldurchführungskanals 22 in das eine Kabeldurchführungsteil 100a lässt sich das andere Kabeldurchführungsteil 100b von der dem Kabeldurchführungsteil 100a gegenüberliegenden Seite der Trennebene 14 aufsetzen und mit diesem verrasten, wobei insgesamt vier Rastfinger 70 in korrespondierende Rastfingeraufnahmen 72 eingreifen und mit ihren Rastnasen 76 beim Verrasten entsprechende Endflächen 74 der Rastfingeraufnahmen 72 hintergreifen.

Dabei werden die Dichtelementteile 16a, b mit ihren Anlageflächen 56a, b kraftbeaufschlagt aneinander angelegt und schließen somit dicht miteinander ab.

Außerdem werden die Innendichtflächenbereiche 28a, b bzw. 30a, b an dem Kabelmantel 26 ebenfalls dichtend angelegt und gegen diesen verpresst, so dass auch insgesamt das Kabel 24 mit dem Kabelmantel 26 dicht abschließend in dem Kabeldurchführungskanal 22 gehalten und auch gegen Zug reibschlüssig fixiert ist.

Bei dem dargestellten ersten Ausführungsbeispiel sind eine Außenkontur der Halteelemente und somit die Stützflächen 90, 92 Mantelflächen eines im Querschnitt rechteckförmigen oder quadratischen Körpers welche der Außenkontur der Halteelemente 60, 62 entsprechen, und die Außendichtfläche 52 ist hieran angepasst, das heißt, sie ist ebenfalls ungefähr eine Mantelfläche eines im Querschnitt rechteckförmigen oder quadratischen Körpers gebildet durch die Außenkontur des Dichtflächenträgers 50.

Es ist aber auch denkbar, die Stützflächen 90, 92 als Mantelflächen eines im Querschnitt ovalen oder runden, insbesondere kreisrunden Zylinders auszubilden und die Außendichtfläche 52 ebenfalls, so dass auch die Halteelemente 60, 62 und der Dichtflächenträger 50 eine entsprechende ovale oder runde Außenkontur aufweisen.

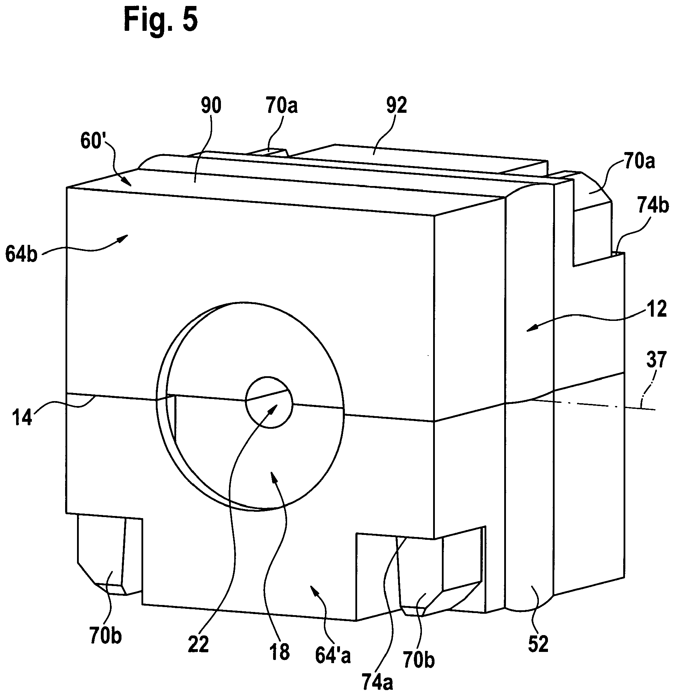

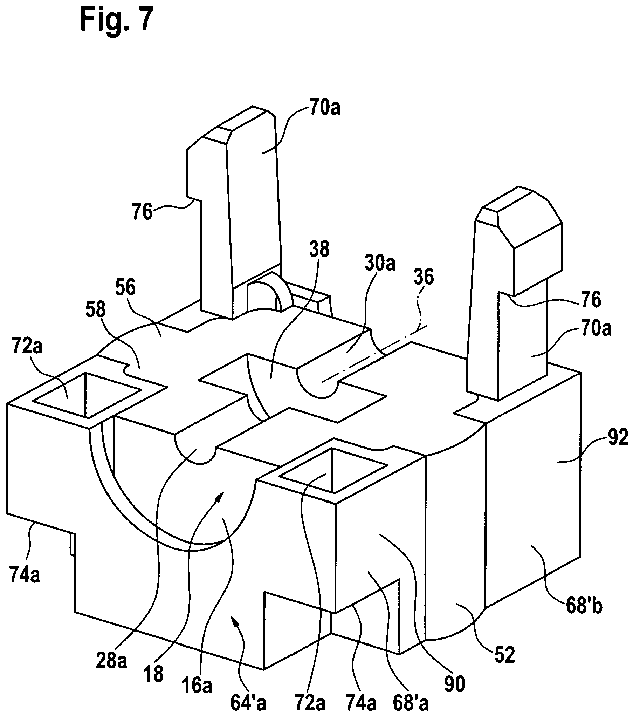

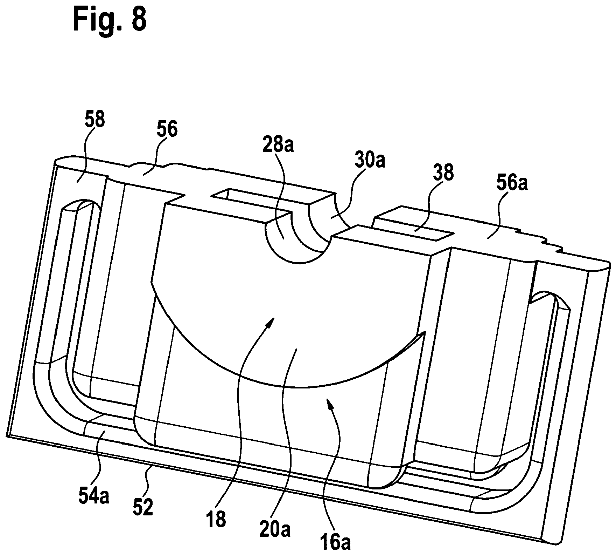

Bei einem zweiten Ausführungsbeispiel einer erfindungsgemäßen Kabeldurchführung, dargestellt in den Figuren 5 bis 8, ist der Durchführungskörper 18, wie in Figur 7 und 8 erkennbar, in gleicher Weise wie beim ersten Ausführungsbeispiel aus zwei Durchführungskörperteilen 20a, b ausgebildet wie beim ersten Ausführungsbeispiel und bildet, wie beispielsweise in Figur 7 dargestellt, in gleicher Weise wie beim ersten Ausführungsbeispiel die Innendichtflächenbereiche 28 und 30.

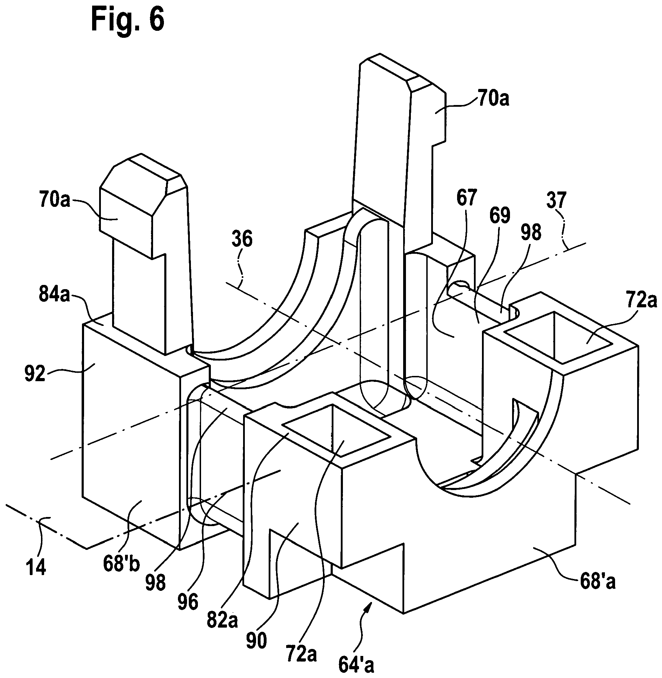

Im Gegensatz zum ersten Ausführungsbeispiel ist allerdings nur ein Halteelement 60' vorgesehen, das aus zwei Halteelementteilen 64'a und 64'b zusammengesetzt ist, wobei allerdings, wie in Figur 7 dargestellt, jedes der Halteelementteile 64'a, b zwei miteinander verbundene Halteelementkörper 68'a und 68'b aufweist, die in Richtung der Mittelachse 36 aufeinanderfolgend angeordnet und, wie in Figur 6 dargestellt, durch einen Verbindungssteg 69 miteinander verbunden sind, wobei der Verbindungssteg 69 ungefähr U-förmig verläuft, so dass das Halteelementteil 64'a, b insgesamt eine wannenähnlich ausgebildete Aufnahme 67 für das jeweilige Dichtelementteil 16a, b bildet.

Ferner ist bei dem zweiten Ausführungsbeispiel der Halteelementkörper 68'a mit zwei Rastfingeraufnahmen 72a versehen, die auf gegenüberliegenden Seiten der Mittelachse 36 angeordnet sind, während der Halteelementkörper 68'b mit zwei Rastfingern 70a versehen ist, die entsprechend dem ersten Ausführungsbeispiel ausgebildet sind.

Somit sind die beiden Halteelementteile 64'a und 64'b spiegelsymmetrisch zu einer Querachse 37 ausgebildet, die senkrecht zur Mittelachse 36 verläuft und ebenfalls in der Trennebene 14 liegt, die die beiden Halteelementteile 64'a, 64'b voneinander trennt.

Zum Verbinden der Halteelementteile 64'a und 64'b durchgreifen die Rastfinger 70a des Halteelementteils 64'a die Trennebene 14 und tauchen in Rastfingeraufnahmen 72b des Halteelementteils 64'b ein, während Rastfinger 70b des Halteelementteils 64'b die Trennebene 14 durchgreifen und in die Rastfingeraufnahmen 72a des Halteelementteils 64'a eingreifen, wie in Figur 5 dargestellt.

Die Rastfinger 70a, 70b verrasten in gleicher Weise mit den Rastfingeraufnahmen 72a, 72b durch Hintergreifen der jeweiligen Endflächen 74b, 74a, wie dies im Zusammenhang mit dem ersten Ausführungsbeispiel beschrieben ist.

Der Verbindungssteg 69 ist dabei so ausgebildet, dass dieser gegenüber den Stützflächen 90, 92, gebildet von den Halteelementkörpern 68'a, 68'b beider Halteelementteile 64'a, b zurückgesetzt verläuft, so dass sich zwischen den Halteelementkörpern 68'a und 68'b eine U-förmige Vertiefung 96 ausbildet.

Ferner ist der Verbindungssteg 69 gegenüber den Halteelementflächen 82a und 84a mit seinen Endkanten 98 zurückgesetzt, so dass sich ausgehend vom Durchführungskörperteil 20a, b, wie in Figur 8 dargestellt, über die Endkanten 98 hinweg das die Außendichtfläche 52 tragende jeweiligen Dichtflächenträgerteil 54 erstreckt, welches lediglich über einen die Endkanten 98 übergreifenden Steg 58 mit dem jeweiligen Durchführungskörperteil 20a, b verbunden ist und im Übrigen in der Vertiefung 96 des jeweiligen Halteelementteils 64'a, 64'b verläuft und durch diesen geführt und abgestützt ist.

Der Steg 58 bildet dabei einen Teil der Anlagefläche 56 des jeweiligen Dichtelementteils 16a, b.

Das jeweilige Durchführungskörperteil 20a, 20b füllt dabei jeweils die Aufnahme 67 für das Durchführungskörperteil 20a, b in dem jeweiligen Halteelementteil 64'a, b aus und ist dadurch in dem jeweiligen Halteelementteil 64'a, b derart abgestützt, dass die Innendichtflächenbereiche 28a, 28b sowie 30a, 30b mit ausreichender Flächenpressung an dem jeweiligen Kabelmantel 26 angelegt werden können.

Hinsichtlich seiner weiteren Merkmale und seiner weiteren Funktionen ist das zweite Ausführungsbeispiel der erfindungsgemäßen Kabeldurchführung in gleicher Weise wie das erste Ausführungsbeispiel ausgebildet und weist die selben Vorteile wie dieses auf, so dass vollinhaltlich auf die Ausführungen zum ersten Ausführungsbeispiel Bezug genommen werden kann.

Insbesondere sowohl beim ersten als auch beim zweiten Ausführungsbeispiel ist das Dichtelement 12 mit dem Dichtelementteilen 16a, 16b aus einem weichelastischen Material, vorzugsweise einem weichen Gummimaterial ausgebildet, das eine gute Abdichtung mit dem Kabelmantel 26 über die Innendichtflächenbereiche 28a, b, 30a, b gewährleistet, außerdem aber auch noch zusätzlich eine gute Abdichtung über die Anlageflächen 56a, 56b der Dichtelementteile 16a, b und schließlich auch noch eine gute Abdichtung über die Außendichtflächen 52, die durch das Dichtelement 12 gebildet werden.

Dagegen sind die Halteelemente 60, 62, insbesondere mit den Halteelementteilen 64a, 64b sowie 64'a, 64'b sowie 66a, b aus einem stabilen Material, vorzugsweise einem formstabilen Kunststoff, beispielsweise einem zähelastischen Kunststoff, ausgebildet, der in der Lage ist, im Bereich der Rastfinger 70 noch eine ausreichende Elastizität zu gewährleisten.

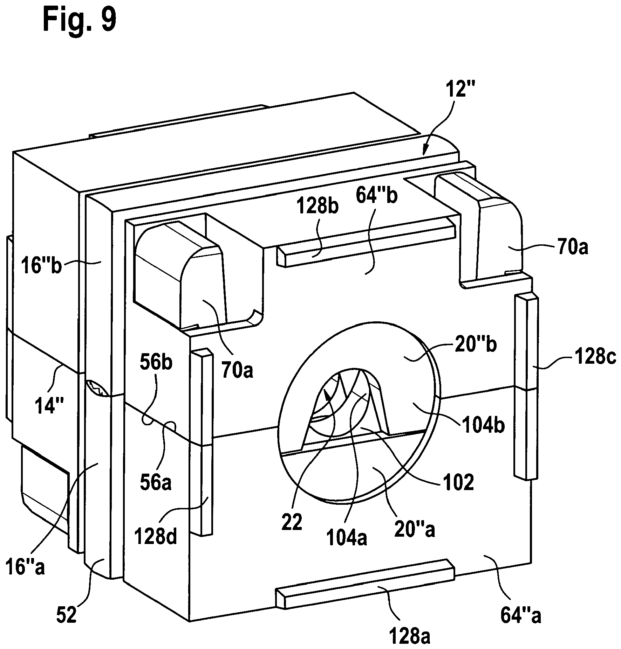

Bei einem dritten Ausführungsbeispiel einer erfindungsgemäßen Kabeldurchführung, dargestellt in den Fig. 9 bis 11, sind diejenigen Elemente, die mit denen der voranstehenden Ausführungsbeispiele identisch sind, mit denselben Bezugszeichen versehen, so dass auf die Ausführungen hierzu vollinhaltlich Bezug genommen wird.

Im Gegensatz zum ersten und zweiten Ausführungsbeispiel ist bei dem dritten Ausführungsbeispiel die Trennfläche 14" keine durchgehende Ebene, sondern nur eben im Bereich der Halteelementflächen 82a und 84a, jedoch bereits im Teilbereich 57a der Anlageflächen 56"a, welcher zum Steg 58 führt, gegenüber der durch die Halteelementflächen 82a und 84a gebildeten Ebene konvex gewölbt.

Ferner ist die Trennfläche 14" im Bereich der Durchführungskörperteile 20"a komplex ausgebildet und umfasst gegenüber der durch die Halteelementflächen 82a und 84a gebildeten Ebene zurückgesetzte Bereiche, beispielsweise die Bereiche 15Z1, 15Z2, 15Z3 und 15Z4, sowie über die durch die Halteflächen 82a und 84a gebildete Ebene vorspringende Bereiche, beispielsweise die Bereiche 15V1, 15V2, 15V3 und 15V4, wobei beim Zusammensetzen zweier Durchführungskörperteile 20"a und 20"b der vorspringende Bereich 15V1 des einen Durchführungskörperteils 20"a in den zurückgesetzten Bereich 15Z1 des anderen Durchführungskörperteils 20"b eingreift, der vorspringende Bereich 15V2 des einen Durchführungskörperteils 20"a in den zurückgesetzten Bereich 15Z2 des anderen Durchführungskörperteils 20"b eingreift, der vorspringende Bereich 15V3 in den zurückgesetzten Bereich 15Z3 des anderen Durchführungskörperteils 20"b eingreift und der vorspringende Bereich 15V4 des einen Durchführungskörperteils 20"a in den zurückgesetzten Bereich 15V4 des anderen Durchführungskörperteils 20"b eingreifen und somit insgesamt eine Verzahnung der Durchführungskörperteile 20"a und 20"b beim Zusammensetzen erfolgt.

Vorzugsweise sind dabei die zurückgesetzten Bereiche 15Z kleiner dimensioniert als die in diese eingreifenden vorspringenden Bereiche 15V, so dass noch eine Deformation des die Durchführungskörperteile 20"a und 20"b bildenden elastischen Materials, insbesondere eine Kompression desselben, erfolgen muss, wobei im Bereich der aneinanderliegenden Flächen der zurückgesetzten Bereiche 15Z und der vorspringenden Bereiche 15V eine hohe wechselweise Flächenpressung entsteht, wodurch ein dichter Abschluss erreichbar ist.

Bei diesem dritten Ausführungsbeispiel werden dabei die zurückgesetzten Bereiche 15Z der Trennfläche 14" durch in das jeweilige Durchführungskörperteil 20" eingeformte Vertiefungen 102 und die vorspringenden Bereiche 15V der Trennebene 14" durch sich beiderseits eines Kabelausschnitts 106 erhebende Vorsprünge 104 der Durchführungskörperteile 20" gebildet.

Darüber hinaus erfolgt auch beim Zusammenpressen der Durchführungskörperteile 20"a und 20"b im Bereich der von den Dichtflächenträgerteilen 54 gebildeten Teilbereiche 57a eine Materialverdrängung des elastischen Materials der Durchführungskörperteile 20"a, b, so dass die Durchführungskörperteile 20"a, b in den Teilbereichen 57a kraftbeaufschlagt aneinander anliegen.

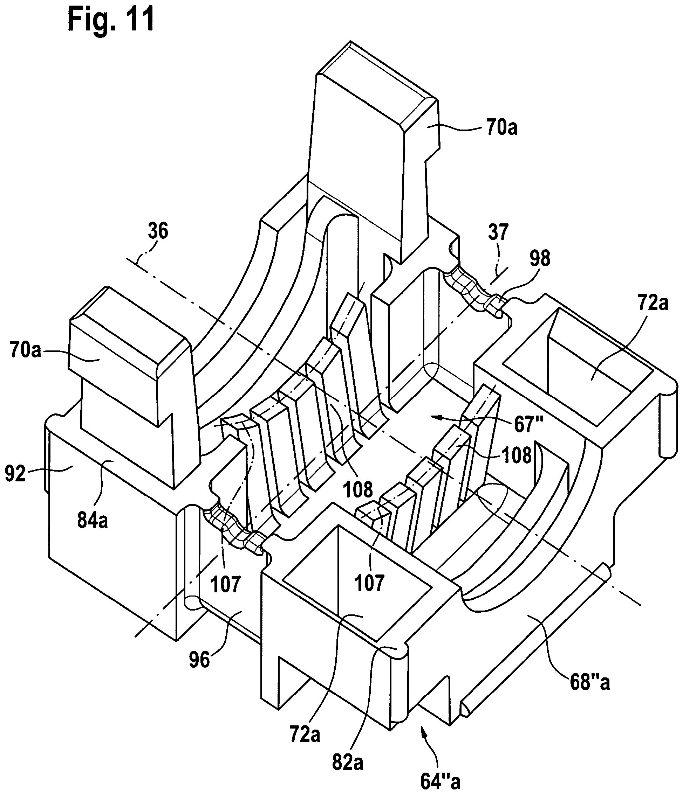

Die Halteelementteile 64"a, b sind im Prinzip genauso ausgebildet wie beim zweiten Ausführungsbeispiel, dargestellt in Fig. 6. Im Gegensatz zum zweiten Ausführungsbeispiel sind allerdings in der Aufnahme 67" vorzugsweise in Reihen 107 angeordnete Stützfinger 108 vorgesehen, welche die Verankerung des jeweiligen Durchführungskörperteils 20"a, b in dem jeweiligen Halteelementteil 64"a verbessern, wie in Fig. 11 dargestellt.

Bei einem vierten Ausführungsbeispiel einer erfindungsgemäßen Kabeldurchführung, dargestellt in Form eines der beiden Kabeldurchführungsteile 100, in diesem Fall des Kabeldurchführungsteils 100a, ist die Trennfläche 14"' ebenfalls keine Ebene, sondern lediglich in gleicher Weise wie beim dritten Ausführungsbeispiel im Bereich der Halteelementflächen 82a und 84a eben ausgebildet, während der Teilbereich 57a als konvexe Fläche ausgebildet ist, wie beim dritten Ausführungsbeispiel. Das jeweilige Durchführungskörperteil 20"', in diesem Fall das Durchführungskörperteil 20"'a, weist in gleicher Weise wie beim ersten Ausführungsbeispiel Dichtringsegmente 40 und 42, in diesem Fall die Dichtringsegmente 40"'a und 42"'a auf, die allerdings sich ausgehend von den Halteelementflächen 82a und 84a in Richtung der Mittelachse 36 konvex erheben, so dass die Innendichtflächenbereich 28a beim einzelnen Durchführungskörperteil 20"'a exzentrisch zur Mittelachse 36 verläuft.

Dadurch entsteht beim Zusammensetzen der Durchführungskörperteile 20"'a, b im Bereich der aneinander anliegenden Dichtringsegmente 40"'a und 40"'b bzw. 42"'a und 42"'b eine erhöhte Flächenpressung der aneinanderliegenden Flächen und somit eine verbesserte Abdichtung im Bereich der die Dichtringe 44"' und 46"' trennenden Trennfläche 14"', die dann näherungsweise aufgrund der Deformation des elastischen Materials in einer in Höhe der Halteelementflächen 82a und 84 verlaufenden Ebene liegt.

Zusätzlich zu den Dichtringsegmenten 40"' und 42"' sind bei dem vierten Ausführungsbeispiel noch weitere Dichtringsegmente 41 und 43 vorgesehen, wobei jedes Dichtringsegment 41 Vorsprünge 104"' aufweist, während das andere Dichtringsegment 43 Vertiefungen 102"' aufweist, die ebenfalls symmetrisch zur Querachse 37 angeordnet sind, so dass beim Zusammensetzen zweiter Durchführungskörperteile 20"'a und 20"'b die Vorsprünge 104'" im Dichtringsegment 41a des einen Durchführungskörperteils 20"'a in die Vertiefungen 102'" des Dichtringsegments 43a des anderen Durchführungskörperteils 20"'b eingreifen und somit noch zusätzlich die Abdichtung verbessern, wobei die Vertiefungen 102"' geringere Abmessungen haben als die in diese eintauchende Vorsprünge 104"', so dass auch im Bereich der zusammenwirkenden Vertiefungen 102"' und Vorsprünge 104"' eine verstärkte Flächenpressung entsteht, die zu einer Deformation des elastischen Materials der Durchführungskörperteile 20"'a und 20"'b im Bereich der Vertiefungen 102"' und Vorsprünge 104"' führt.

Die Vertiefungen 102"' und die Vorsprünge 104"' bilden dabei ebenfalls einerseits zurückgesetzte Bereiche 15"'z bzw. vorspringende Bereiche 15"'v der Trennfläche 14"', die somit im Bereich der Vertiefungen 102"' und Vorsprünge 104"' eine komplexe Flächenform aufweist.

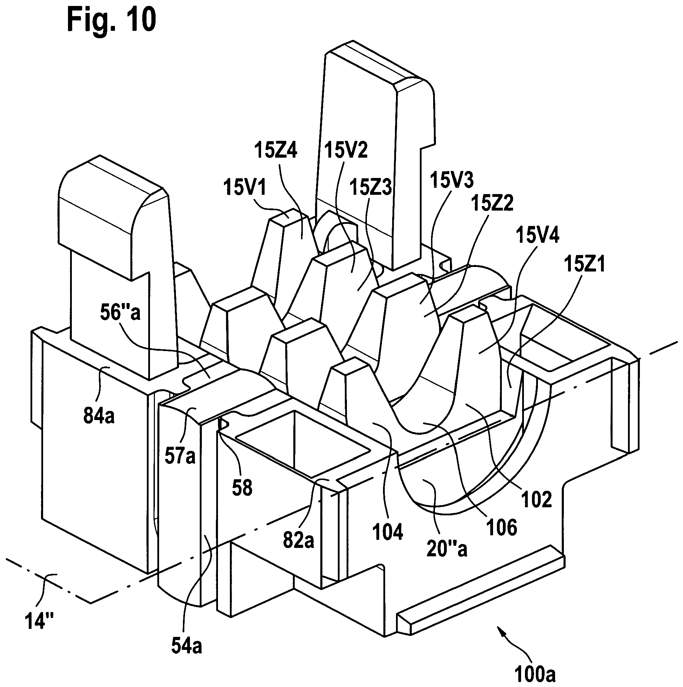

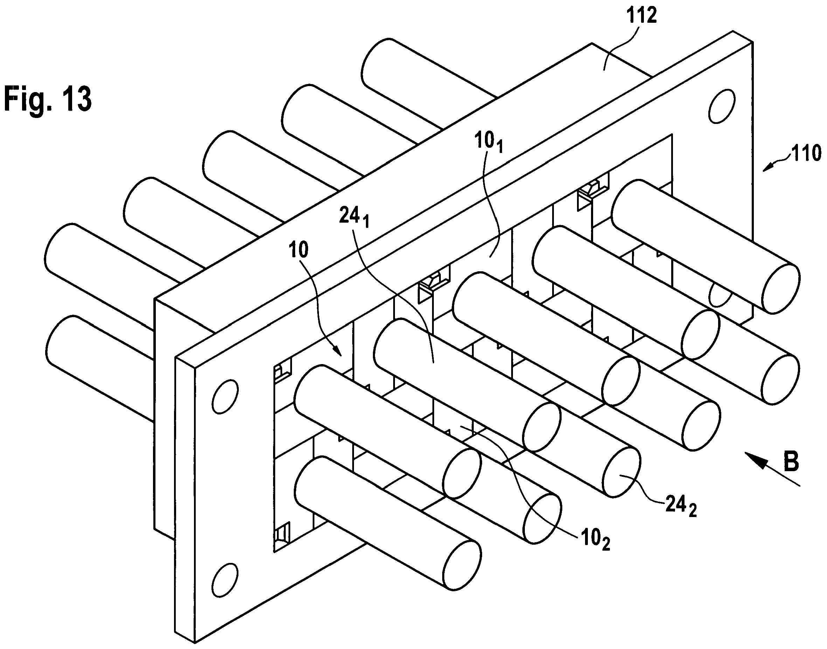

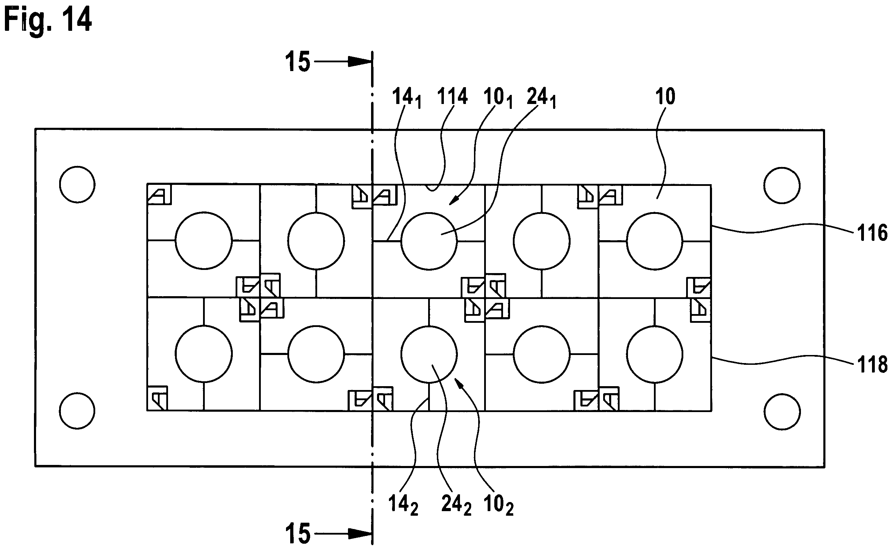

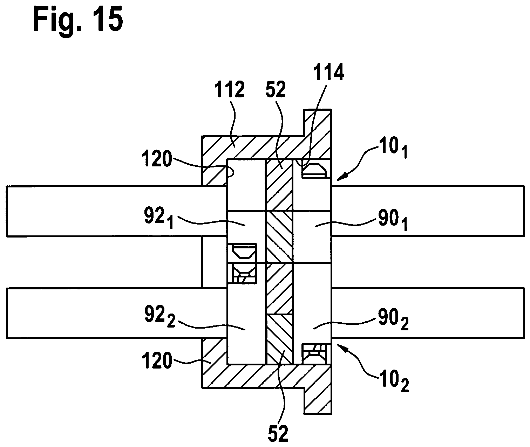

Die in Figur 1 bis 4 oder 5 bis 9 dargestellten erfindungsgemäßen Kabeldurchführungen 10 lassen sich, wie in den Figuren 13 bis 15 dargestellt, bei Stützflächen 90, 92 und einer Außendichtfläche 52, die Mantelflächen von im Querschnitt rechteckförmigen oder quadratischen Körpern entsprechen, zu Kabeldurchführungssystemen 110 kombinieren, bei welchen mehrere der erfindungsgemäßen Kabeldurchführungen 10 unmittelbar nebeneinander sitzend in einem Rahmen 112 angeordnet sind, wobei die einzelnen Kabeldurchführungen 20, wie in Figur 10 und Figur 11 dargestellt, mit ihren Außendichtflächen 52 entweder an einer Innenfläche 114 des Rahmens 112 oder an Außendichtflächen 52 benachbarter Kabeldurchführungen 10 anliegen und somit jeweils umlaufend um jede erfindungsgemäße Kabeldurchführung 10 ein dichter Abschluss entsteht.

Gleichzeitig ist in jeder der Kabeldurchführungen 10 das durchgeführte Kabel 24 ebenfalls dicht in dem Durchführungskörper 18 gehalten, so dass insgesamt eine Abdichtung des jeweiligen Kabels 24 gegenüber dem Rahmen 112 erfolgt.

Vorzugsweise sind zur Verbesserung der Abdichtung benachbarte Kabeldurchführungen 10 stets so angeordnet, dass deren Trennebenen 14 nicht miteinander fluchten, sondern quer, vorzugsweise senkrecht zueinander verlaufen.

Ferner liegen die Kabeldurchführungen 10 in dem Rahmen 112 vorzugsweise so, dass sie nebeneinander liegende Reihen 116, 118 bilden, wobei jede der Reihen 116, 118 einerseits an dem Rahmen 112 und andererseits an der angrenzenden Reihe 118, 116 anliegt.

Ferner ist der Rahmen 112 noch mit einer Hinterschneidung 120 versehen, wobei jede der Reihen 116, 118 gegen eine derartige Hinterschneidung 120 abgestützt ist.

Bei der dichten Anordnung der erfindungsgemäßen Kabeldurchführungen 10 in dem Rahmen 112 erfolgt dabei ein Verpressen der Außenabschnitte 94 derart, dass die Außendichtflächen 52 im Wesentlichen bündig mit den Stützflächen 90, 92 verläuft und sich außerdem die Kabeldurchführungen 10 gegenseitig und am Rahmen 112 noch zusätzlich über ihre Stützflächen 90 und 92 aneinander abstützen und somit insgesamt eine stabile und zumindest kraftschlüssige Fixierung der Kabeldurchführungen 10 in dem Rahmen 112 erfolgt.

Alternativ ist es auch möglich, in einem Aufnahmekörper eine Vielzahl von ovalen oder runden Aufnahmen für Kabeldurchführungen mit Stützflächen 90, 92 und einer Außendichtfläche 52 vorzusehen, die Mantelflächen von im Querschnitt ovalen oder runden Zylindern entsprechen, wobei in jeder Aufnahme eine Abdichtung durch die jeweilige Außendichtfläche 52 erfolgt.

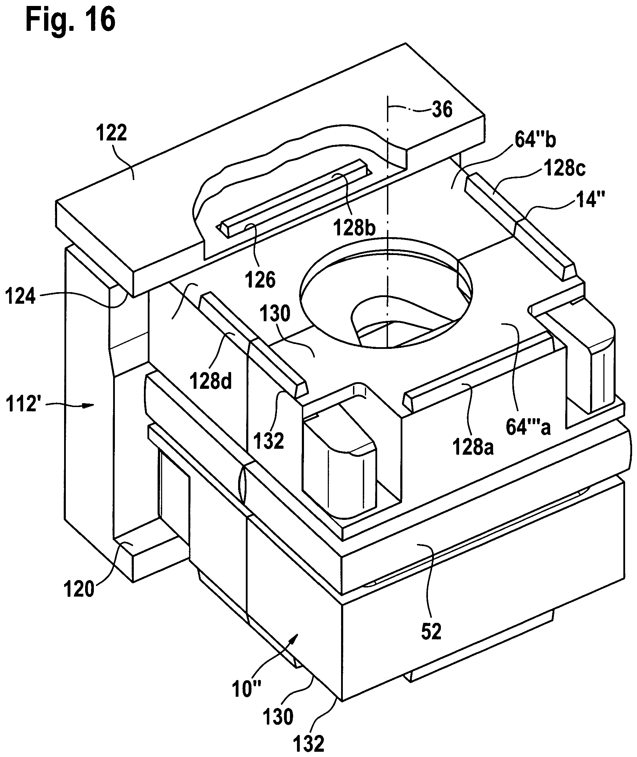

Bei einem zweiten Ausführungsbeispiel eines erfindungsgemäßen Kabeldurchführungssystems, dargestellt in Fig. 16, sind diejenigen Elemente, die mit denen des ersten Ausführungsbeispiels identisch sind, mit denselben Bezugszeichen versehen, so dass hinsichtlich der Beschreibung vollinhaltlich auf diese verwiesen werden kann.

Im Gegensatz zum ersten Ausführungsbeispiel des erfindungsgemäßen Kabeldurchführungssystems ist der Rahmen 112' so ausgebildet, dass dieser eine abnehmbare Rahmenabdeckung 122 aufweist, die nach Einsetzen der Vielzahl von Kabeldurchführungen 10" gemäß dem dritten Ausführungsbeispiel oder 10"' gemäß dem vierten Ausführungsbeispiel auf den Rahmen 112 aufgesetzt wird, so dass eine der Hinterschneidung 120 gegenüberliegende weitere Hinterschneidung 124 entsteht.

Die Rahmenabdeckung 122 ist noch mit Positionieröffnungen 126 versehen, in welche einer der Positioniervorsprünge 128 der jeweiligen Kabeldurchführung 10" eingreifen kann, wobei durch die Positionieröffnung 126 eine unverschiebliche Positionierung der jeweiligen Kabeldurchführung 10" im Rahmen 112' möglich ist.

Vorzugsweise sind die Kabeldurchführungen 10" oder 10"' an Außenkanten 132 von ihren beiden einander gegenüberliegenden Stirnseiten 130 mit Positioniervorsprüngen 128 versehen, wobei die Positioniervorsprünge 128 alle in derselben Position zur Mittelachse 36 und vorzugsweise rotationssymmetrisch zur Mittelachse 36 angeordnet sind, so dass die Kabeldurchführungen 10" mit einem ihrer Positioniervorsprünge 128a bis 128d durch jeweils Drehen um 90° um die Mittelachse 36 mit der einen ausgewählten Positionieröffnung 126 in der Rahmenabdeckung 122 in Eingriff gebracht und somit positioniert werden kann.

Die Positioniervorsprünge 128c und 128d sind dabei noch durch die Trennfläche 14' getrennt, haben aber insgesamt dieselbe Ausdehnung, Position und Dimension wie jeder der Positioniervorsprünge 128a und 128b (Fig. 16).

In dem Rahmen 112' ist für jede einzusetzende Kabeldurchführung mindestens eine Positionieröffnung 126 an der Rahmenabdeckung 122 vorgesehen, so dass dadurch eine sichere, zuverlässige und insbesondere unverschiebliche Fixierung der Kabeldurchführungen 10" im jeweiligen Rahmen 112' durchführbar ist.

Ergänzend zum Vorsehen der Positionieröffnungen 126 in der Rahmenabdeckung 122 sind ebenfalls Positionieröffnungen 126 in dem die Hinterschneidung 120 tragenden Teil des Rahmens 112' vorgesehen.

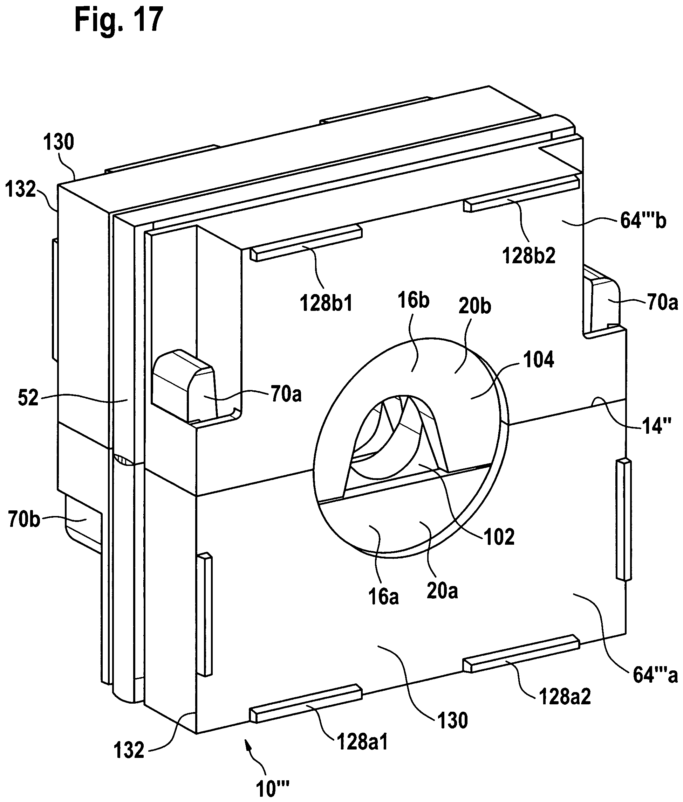

Die Kabeldurchführungen 10 müssen für ein erfindungsgemäßes Kabeldurchführungssystem nicht stets dieselbe Standardgröße aufweisen, sondern es ist denkbar, unterschiedliche Standardgrößen vorzusehen, wobei es vorteilhaft ist, bei unterschiedlichen Standardgrößen die aufeinanderfolgenden Standardgrößen so zu dimensionieren, dass die nächstgrößere Standardgröße die doppelte Kantenlänge aufweist. Eine derartige weitere Standardgröße einer Kabeldurchführung ist in Fig. 17 als fünftes Ausführungsbeispiel dargestellt, wobei an jeder Außenkante zwei Positioniervorsprünge 128, beispielsweise die Positioniervorsprünge 128a1 und 128a2 vorgesehen sind, die den Abstand voneinander aufweisen, den bei der Standardgröße mit der halben Kantenlänge die Positioniervorsprünge 128 zweier unmittelbar benachbarter Kabeldurchführungen 10" aufweisen.

Eine Kabeldurchführung 10"' nimmt somit den vierfachen Raum beispielsweise einer Kabeldurchführung 10" im Rahmen 112' ein und ersetzt somit vier Kabeldurchführungen 10".

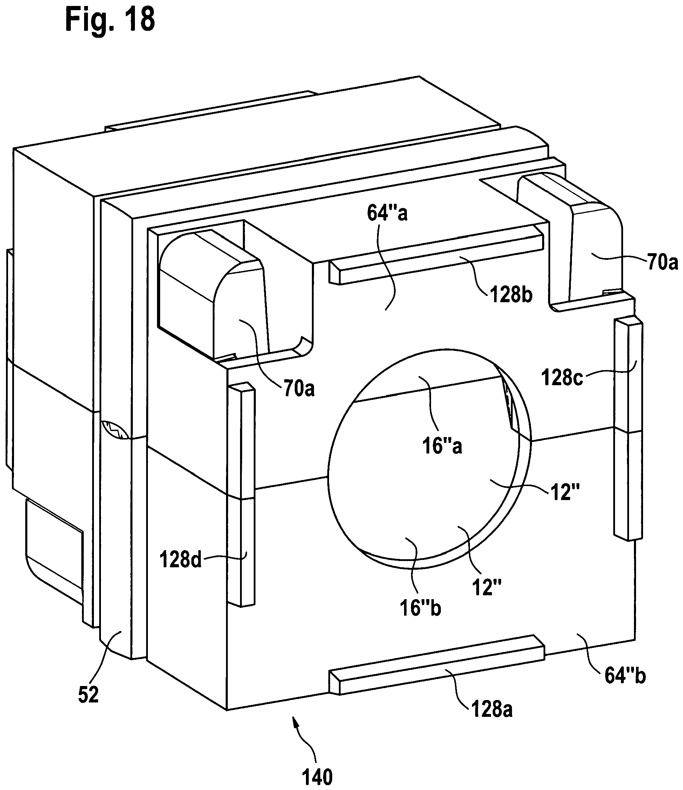

Um bei einem der erfindungsgemäßen Kabeldurchführungssysteme den Rahmen 112, beispielsweise den Rahmen 112', auch dann einsetzen zu können, wenn die erforderliche Zahl der Kabeldurchführungen 10" oder 10"' geringer ist als die in dem Rahmen 112' mögliche Zahl der Kabeldurchführungen 10" oder 10"', sind in einem derartigen Kabeldurchführungssystem auch in Fig. 18 dargestellte Blinddurchführungen 140 einsetzbar, deren Halteelementteile 64"a und 64"b in gleicher Weise ausgebildet sind, wie beispielsweise bei dem dritten Ausführungsbeispiel. Ferner sind diese Halteelementteile 64"a und 64"b ebenfalls mit Dichtelementen 12" versehen, welche im Prinzip in gleicher Weise ausgebildet sind, wie bei dem dritten Ausführungsbeispiel, allerdings keinen Kabelausschnitt 106 aufweisen, so dass insgesamt das Zusammensetzen der Dichtelementteile 16"a und 16"b zu einem dichten Abschluss von den Halteelementteilen 64"a und 64"b umschlossenen Innenraum führt und somit mit einer derartigen Blinddurchführung 140 nicht für Kabeldurchführungen 10" in dem Rahmen 112' benötigte Plätze aufgefüllt werden können.

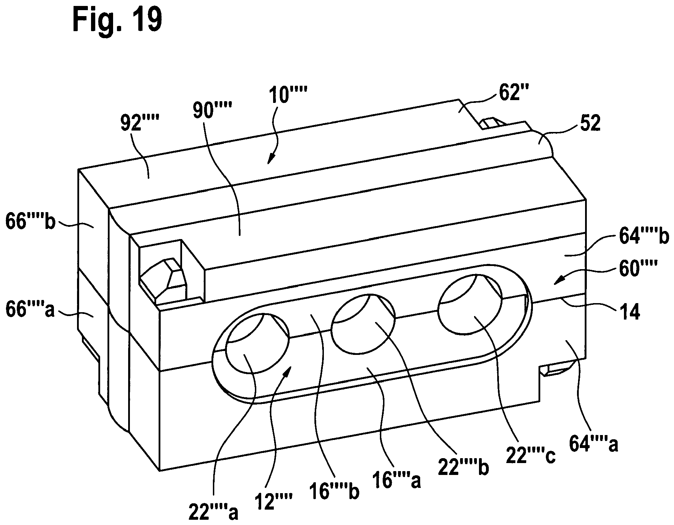

Ein sechstes Ausführungsbeispiel einer erfindungsgemäßen Kabeldurchführung, dargestellt in Figur 19, ist vom Prinzip in gleicher Weise aufgebaut wie das erste Ausführungsbeispiel, allerdings ist das Dichtelement 12"" so ausgebildet, dass es mehrere, beispielsweise drei Kabeldurchführungskanäle 22""a, 22""b und 22""c umfasst, die nebeneinander liegend angeordnet sind.

Das Dichtelement 12"" ist jedoch nach wie vor aus zwei Dichtelementteilen 16""a und 16""b zusammengesetzt, wobei die Dichtelementteile ebenfalls wiederum durch Halteelemente 60"" und 62"" zusammengehalten werden, die ebenfalls durch die Trennebene 14 in Halteelementteile 64""a und 64""b sowie 66""a und 66""b aufgeteilt sind.

Außerdem ist es bei dem sechsten Ausführungsbeispiel möglich, die Kabeldurchführungskanäle auch mit nicht runden Querschnittsformen auszubilden und somit auch im Querschnitt beispielsweise ovale, rechteckige oder flache Kabel durchzuführen und mit diesen einen dichten Abschluss zu erhalten.

Im Übrigen ist das sechste Ausführungsbeispiel der erfindungsgemäßen Kabeldurchführung aus Elementen aufgebaut, die mit denen des ersten oder zweiten Ausführungsbeispiels identisch sind, so dass hinsichtlich der Beschreibung derselben vollinhaltlich auf das erste oder zweite Ausführungsbeispiel Bezug genommen werden kann.

Das sechste Ausführungsbeispiel der erfindungsgemäßen Kabeldurchführung 10"" lässt sich ebenfalls mit mehreren der Kabeldurchführungen 10 und/oder 10"" in den Rahmen 112 einsetzen, wobei vorzugsweise die Außenabmessungen im Bereich der Stützflächen 90"" und 92"" derart gewählt sind, dass das zweite Ausführungsbeispiel der Kabeldurchführung 10"" denselben Raum benötigt wie zwei Kabeldurchführungen 10 des ersten Ausführungsbeispiels, so dass in gleicher Weise eine Kombination auch mit den Kabeldurchführungen 10 des ersten Ausführungsbeispiels möglich ist.

## Patentansprüche

1. Kabeldurchführung (10) mit einem mindestens einen Kabeldurchführungskanal (22) aufweisenden elastischen Dichtelement (12), das aus (16a, zwei durch eine Trennfläche (14) getrennten Dichtelementteilen (16a, 16b) zusammengesetzt ist und einen den mindestens einen Kabeldurchführungskanal (22) umfassenden Durchführungskörper (18) aufweist, der an mindestens einem Kabelmantel (26) dichtend anlegbare Innendichtflächen (32, 34) umfasst, mit mindestens einem Halteelement (60, 62), mit welchem die beiden Dichtelementteile (16) derart beaufschlagbar sind, dass die Innendichtflächen (32, 34) am Kabelmantel (26) und die Dichtelementteile (16) mit ihren jeweils an die Trennfläche (14) angrenzenden Anlageflächen (56) aneinander dichtend anliegen, **dadurch gekennzeichnet, dass** das mindestens eine Halteelement (60, 62) eine Außenkontur und somit als Mantelflächen eines im Querschnitt rechteckförmigen oder quadratischen Körpers ausgebildete Stützflächen (90, 92) umfasst, dass das elastische Dichtelement (12) mit einer Außendichtfläche (52) für die Kabeldurchführung (10) versehen ist, und dass die Außendichtfläche (52) des Dichtelements (12) im unbeaufschlagten Zustand der Kabeldurchführung (10) über die Stützflächen (90, 92) des mindestens einen Halteelements (60, 62) übersteht.

2. Kabeldurchführung nach Anspruch 1, **dadurch gekennzeichnet, dass** das Halteelement (60, 62) aus zwei Halteelementteilen (64, 66) zusammengesetzt ist.

3. Kabeldurchführung nach Anspruch 2, **dadurch gekennzeichnet, dass** eine die Halteelementteile (64, 66) trennende Trennfläche (14) mit der Trennfläche (14) der Dichtelementteile (16) zusammenfällt.

4. Kabeldurchführung nach einem der voranstehenden Ansprüche, **dadurch gekennzeichnet, dass** die Halteelementteile (64, 66) durch Formschluss (74, 76) miteinander verbindbar sind.

5. Kabeldurchführung nach einem der voranstehenden Ansprüche, **dadurch gekennzeichnet, dass** die Halteelementteile (64, 66) eines Halteelements (60, 62) spiegelsymmetrisch zu einer Mittelachse (36) des Halteelements (60, 62) ausgebildet sind.

6. Kabeldurchführung nach Anspruch 5, **dadurch gekennzeichnet, dass** die Mittelachse (36) in der Trennfläche (14) liegt.

7. Kabeldurchführung nach einem der voranstehenden Ansprüche, **dadurch gekennzeichnet, dass** die Halteelementteile (64'a, 64'b) spiegelsymmetrisch zu einer Querachse (37) ausgebildet sind.

8. Kabeldurchführung nach Anspruch 7, **dadurch gekennzeichnet, dass** die Querachse (37) in der Trennfläche (14) liegt.

9. Kabeldurchführung nach einem der voranstehenden Ansprüche, **dadurch gekennzeichnet, dass** mindestens ein Halteelementteil (64, 66) mit einem Dichtelementteil (16) zu einem Kabeldurchführungsteil (100) verbunden ist.

10. Kabeldurchführung nach Anspruch 9, **dadurch gekennzeichnet, dass** das mindestens eine Halteelementteil (64, 66) mit dem Dichtelementteil (16) stoffschlüssig verbunden ist.

11. Kabeldurchführung nach einem der voranstehenden Ansprüche, **dadurch gekennzeichnet, dass** das Halteelement (60, 62) mindestens auf einen Abschnitt des Durchführungskörpers (18) wirkt.

12. Kabeldurchführung nach einem der voranstehenden Ansprüche, **dadurch gekennzeichnet, dass** das mindestens eine Halteelement (60, 62) Stützflächen (90, 92) für eine Aufnahme (112) für die Kabeldurchführung (10) bildet.

13. Kabeldurchführung nach Anspruch 12, **dadurch gekennzeichnet, dass** die Stützflächen (90, 92) an einer Mantelkontur des mindestens einen Halteelements (60, 62) angeordnet sind.

14. Kabeldurchführung nach einem der voranstehenden Ansprüche, **dadurch gekennzeichnet, dass** die Außendichtfläche (52) um das elastische Dichtelement (12) geschlossen umläuft.

15. Kabeldurchführung nach einem der voranstehenden Ansprüche, **dadurch gekennzeichnet, dass** die Außendichtfläche (52) auf einem an den Durchführungskörper (18) angeformten Dichtflächenträger (50) angeordnet ist.

16. Kabeldurchführung nach Anspruch 15, **dadurch gekennzeichnet, dass** der Dichtflächenträger (50) in radialer Richtung zum Kabeldurchführungskanal (22) außenliegend gegenüber dem Durchführungskörper (18) verläuft.

17. Kabeldurchführung nach Anspruch 15 oder 16, **dadurch gekennzeichnet, dass** der Dichtflächenträger (50) mit einem die Außendichtfläche (52) tragenden Außenabschnitt (94) in radialer Richtung zum Kabeldurchführungskanal (22) über das mindestens eine Halteelement (60, 62) übersteht.

18. Kabeldurchführung nach einem der voranstehenden Ansprüche, **dadurch gekennzeichnet, dass** das mindestens eine Halteelement (60, 62) eine Außenkontur aufweist, die der der Außendichtfläche (52) des Dichtelements (12) angepasst ist.

19. Kabeldurchführung nach einem der Ansprüche 15 bis 18, **dadurch gekennzeichnet, dass** der Dichtflächenträger (50) zwischen zwei Stützflächen (90, 92) angeordnet ist.

20. Kabeldurchführung nach einem der voranstehenden Ansprüche, **dadurch gekennzeichnet, dass** das Dichtelement (12) an dem Kabelmantel (26) anlegbare Innendichtflächen (32, 34) tragende Dichtringe (44, 46) umfasst.

21. Kabeldurchführung nach Anspruch 20, **dadurch gekennzeichnet, dass** das Dichtelement (12) mehrere im Abstand voneinander angeordnete Dichtringe (44, 46) umfasst.

22. Kabeldurchführung nach einem der voranstehenden Ansprüche, **dadurch gekennzeichnet, dass** die Dichtelementteile (16) ineinandergreifende Vertiefungen (102) und/oder Vorsprünge aufweisen.

23. Kabeldurchführung nach Anspruch 22, **dadurch gekennzeichnet, dass** jedes der Dichtelementteile (16) mindestens eine Vertiefung (102) und mindestens einen Vorsprung (104) aufweist.

24. Kabeldurchführung nach einem der voranstehenden Ansprüche, **dadurch gekennzeichnet, dass** die Dichtelementteile (16) so ausgebildet sind, dass deren Zusammensetzen zu dem Dichtelement (12) zu einer Deformation des die Dichtelementteile (16) bildenden elastischen Materials führt.

25. Kabeldurchführung nach einem der voranstehenden Ansprüche, **dadurch gekennzeichnet, dass** jedes Dichtelement (12) aus identischen Dichtelementteilen (16) zusammengesetzt ist.

26. Kabeldurchführung nach einem der voranstehenden Ansprüche, **dadurch gekennzeichnet, dass** die Dichtelementteile (16) spiegelsymmetrisch zu einer Mittelachse (36) ausgebildet sind.

27. Kabeldurchführung nach einem der voranstehenden Ansprüche, **dadurch gekennzeichnet, dass** die Dichtelementteile (16) spiegelsymmetrisch zu einer Querachse (37) ausgebildet sind.

28. Kabeldurchführung nach einem der voranstehenden Ansprüche, **dadurch gekennzeichnet, dass** die Dichtelementteile (16) durch Formschluss miteinander verbindbar sind.

29. Kabeldurchführung nach einem der voranstehenden Ansprüche, **dadurch gekennzeichnet, dass** jedes Halteelement (60, 62) aus identischen Halteelementteilen (64, 66) zusammengesetzt ist.

30. Kabeldurchführung nach Anspruch 29, **dadurch gekennzeichnet, dass** beide Halteelemente (60, 62) der Kabeldurchführung (10) aus identischen Halteelementteilen (64, 66) zusammengesetzt sind.

31. Kabeldurchführung nach einem der voranstehenden Ansprüche, **dadurch gekennzeichnet, dass** die Dichtelementteile (16) identisch ausgebildet sind.

32. Kabeldurchführung nach einem der Ansprüche 9 bis 31, **dadurch gekennzeichnet, dass** die Kabeldurchführungsteile (100) identisch ausgebildet sind.

33. Kabeldurchführungssystem, **dadurch gekennzeichnet, dass** dieses einen Rahmen (112) umfasst, in dem mindestens eine Kabeldurchführung (10) nach einem der voranstehenden Ansprüche eingesetzt ist, die mit ihrer Außendichtfläche (52) zumindest teilweise am Rahmen (112) abdichtend anliegt.

34. Kabeldurchführungssystem nach Anspruch 33, **dadurch gekennzeichnet, dass** die mindestens eine Kabeldurchführung (10) mit einem in eine Positionieröffnung (126) eingreifenden Positioniervorsprung (128) in dem Rahmen (112') fixierbar ist.

35. Kabeldurchführungssystem nach Anspruch 33 oder 34, **dadurch gekennzeichnet, dass** in den Rahmen (112) mehrere Kabeldurchführungen (10) nach einem der Ansprüche 1 bis 27 eingesetzt sind.

36. Kabeldurchführungssystem nach einem der Ansprüche 33 bis 35,
**dadurch gekennzeichnet, dass** mindestens eine der Kabeidurchführungen (10) mit ihrer Außendichtfläche (52) zum Teil an dem Rahmen (112) und zum Teil an Außendichtflächen (52) von anderen der Kabeldurchführungen (10) anliegt.

37. Kabeldurchführungssystem nach einem der Ansprüche 35 oder 36, **dadurch gekennzeichnet, dass** die Trennflächen (14) nebeneinanderliegender Kabeldurchführungen (10) quer zueinander verlaufen.

## Claims

1. Cable feed-through (10) with an elastic sealing element (12) having at least one cable feed-through channel (22), said elastic sealing element being assembled from two sealing element parts (16a, 16b) separated by a dividing surface (14) and having a feed-through member (18) comprising the at least one cable feed-through channel (22), said feed-through member comprising inner sealing surfaces (32, 34) adapted to abut sealingly on at least one cable sheath (26), with at least one holding element (60, 62), the two sealing element parts (16) being acted upon with said holding element in such a manner that the inner sealing surfaces (32, 34) abut sealingly on the cable sheath (26) and the sealing element parts (16) abut sealingly on one another with their contact surfaces (56) respectively bordering on the dividing surface (14), **characterized in that** the at least one holding element (60, 62) has an outer contour and therefore supporting surfaces (90, 92) designed as shell surfaces of a member rectangular or square in cross section, that the elastic sealing element (12) is provided with an outer sealing surface (52) for the cable feed-through (10) and that the outer sealing surface (52) of the sealing element (12) projects beyond the supporting surfaces (90, 92) of the at least one holding element (60, 62) in the state of the cable feed-through (10) not acted upon with a force.

2. Cable feed-through as defined in claim 1, **characterized in that** the holding element (60, 62) is assembled from two holding element parts (64, 66).

3. Cable feed-through as defined in claim 2, **characterized in that** a dividing surface (14) separating the holding element parts (64, 66) coincides with the dividing surface (14) of the sealing element parts (16).

4. Cable feed-through as defined in any one of the preceding claims, **characterized in that** the holding element parts (64, 66) are connectable to one another by way of form locking (74, 76).

5. Cable feed-through as defined in any one of the preceding claims, **characterized in that** the holding element parts (64, 66) of a holding element (60, 62) are designed to be mirror symmetric to a central axis (36) of the holding element (60, 62).

6. Cable feed-through as defined in claim 5, **characterized in that** the central axis (36) is located in the dividing surface (14).

7. Cable feed-through as defined in any one of the preceding claims, **characterized in that** the holding element parts (64'a, 64'b) are designed to be mirror symmetric to a transverse axis (37).

8. Cable feed-through as defined in claim 7, **characterized in that** the transverse axis (37) is located in the dividing surface (14).

9. Cable feed-through as defined in any one of the preceding claims, **characterized in that** at least one holding element part (64, 66) is connected to a sealing element part (16) to form a cable feed-through part (100).

10. Cable feed-through as defined in claim 9, **characterized in that** the at least one holding element part (64, 66) is connected to the sealing element part (16) in a material locking manner.

11. Cable feed-through as defined in any one of the preceding claims, **characterized in that** the holding element (60, 62) acts on at least one section of the feed-through member (18).

12. Cable feed-through as defined in any one of the preceding claims, **characterized in that** the at least one holding element (60, 62) forms supporting surfaces (90, 92) for a receptacle (112) for the cable feed-through (10).

13. Cable feed-through as defined in claim 12, **characterized in that** the supporting surfaces (90, 92) are arranged on an outer contour of the at least one holding element (60, 62).

14. Cable feed-through as defined in any one of the preceding claims, **characterized in that** the outer sealing surface (52) extends around the elastic sealing element (12) in a closed manner.

15. Cable feed-through as defined in any one of the preceding claims, **characterized in that** the outer sealing surface (52) is arranged on a sealing surface carrier (50) integrally formed on the feed-through member (18).

16. Cable feed-through as defined in claim 15, **characterized in that** the sealing surface carrier (50) extends in a radial direction in relation to the cable feed-through channel (22) in a manner located outwardly in relation to the feed-through member (18).

17. Cable feed-through as defined in claim 15 or 16, **characterized in that** the sealing surface carrier (50) projects beyond the at least one holding element (60, 62) in a radial direction in relation to the cable feed-through channel (22) with an outer section (94) bearing the outer sealing surface (52).

18. Cable feed-through as defined in any one of the preceding claims, **characterized in that** the at least one holding element (60, 62) has an outer contour adapted to that of the outer sealing surface (52) of the sealing element (12).

19. Cable feed-through as defined in any one of claims 15 to 18, **characterized in that** the sealing surface carrier (50) is arranged between two supporting surfaces (90, 92).

20. Cable feed-through as defined in any one of the preceding claims, **characterized in that** the sealing element (12) comprises sealing rings (44, 46) bearing inner sealing surfaces (32, 34) adapted to abut on the cable sheath (26).

21. Cable feed-through as defined in claim 20, **characterized in that** the sealing element (12) comprises several sealing rings (44, 46) arranged at a distance from one another.

22. Cable feed-through as defined in any one of the preceding claims, **characterized in that** the sealing element parts (16) have recesses (102) and/or projections engaging in one another.

23. Cable feed-through as defined in claim 22, **characterized in that** each of the sealing element parts (16) has at least one recess (102) and at least one projection (104).

24. Cable feed-through as defined in any one of the preceding claims, **characterized in that** the sealing element parts (16) are designed such that their assembly to form the sealing element (12) leads to a deformation of the elastic material forming the sealing element parts (16).

25. Cable feed-through as defined in any one of the preceding claims, **characterized in that** each sealing element (12) is assembled from identical sealing element parts (16).

26. Cable feed-through as defined in any one of the preceding claims, **characterized in that** the sealing element parts (16) are designed to be mirror symmetric to a central axis (36).

27. Cable feed-through as defined in any one of the preceding claims, **characterized in that** the sealing element parts (16) are designed to be mirror symmetric to a transverse axis (37).

28. Cable feed-through as defined in any one of the preceding claims, **characterized in that** the sealing element parts (16) are connectable to one another by way of form locking.

29. Cable feed-through as defined in any one of the preceding claims, **characterized in that** each holding element (60, 62) is assembled from identical holding element parts (64, 66).

30. Cable feed-through as defined in claim 29, **characterized in that** both holding elements (60, 62) of the cable feed-through (10) are assembled from identical holding element parts (64, 66).

31. Cable feed-through as defined in any one of the preceding claims, **characterized in that** the sealing element parts (16) are of an identical design.

32. Cable feed-through as defined in any one of claims 9 to 31, **characterized in that** the cable feed-through parts (100) are of an identical design.

33. Cable feed-through system, **characterized in that** this comprises a frame (112), at least one cable feed-through (10) as defined in any one of the preceding claims being inserted in said frame, said cable feed-through abutting sealingly on the frame (112) at least partially with its outer sealing surface (52).

34. Cable feed-through system as defined in claim 33, **characterized in that** the at least one cable feed-through (10) is adapted to be fixed in the frame (112') with a positioning projection (128) engaging in a positioning opening (126).

35. Cable feed-through system as defined in claim 33 or 34, **characterized in that** several cable feed-throughs (10) as defined in any one of claims 1 to 27 are inserted into the frame (112).

36. Cable feed-through system as defined in any one of claims 33 to 35, **characterized in that** at least one of the cable feed-throughs (10) abuts with its outer sealing surface (52) partially on the frame (112) and partially on outer sealing surfaces (52) of other ones of the cable feed-throughs (10).

37. Cable feed-through system as defined in either one of claims 35 or 36, **characterized in that** the dividing surfaces (14) of cable feed-throughs (10) located next to one another extend transversely to one another.

## Revendications

1. Passe-câble (10) comprenant un élément d'étanchéité élastique (12) comportant au moins une goulotte de passage de câble (22), lequel élément d'étanchéité est composé de deux parties (16a, 16b) d'élément d'étanchéité séparées par une surface de séparation (14) et comprend un corps de passage (18) comportant la au moins la goulotte de passage de câble (22), lequel corps présente des surfaces d'étanchéité intérieures (32, 34) pouvant s'appliquer de manière étanche contre au moins une gaine de câble (26), au moins un élément de retenue (60, 62), au moyen duquel les deux parties (16) d'élément d'étanchéité sont sollicitées de telle manière que les surfaces d'étanchéité intérieures (32, 34) reposent de manière étanche les unes contre les autres par leurs surfaces d'appui (56) respectivement adjacentes à la surface de séparation (14), **caractérisé en ce que** le au moins un élément de retenue (60, 62) présente un contour extérieur et donc des surfaces de support (90, 92) réalisées sous la forme de surfaces périphériques d'un corps rectangulaire ou carré en section transversale, **en ce que** l'élément d'étanchéité élastique (12) est pourvu d'une surface d'étanchéité extérieure (52) pour le passe-câble (10), et **en ce que** la surface d'étanchéité extérieure (52) de l'élément d'étanchéité (12), lorsque le passe-câble (10) n'est pas sollicité, fait saillie des surfaces de support (90, 92) du au moins un élément de retenue (60, 62).

2. Passe-câble selon la revendication 1, **caractérisé en ce que** l'élément de retenue (60, 62) est composé de deux parties (64, 66) d'élément de retenue.

3. Passe-câble selon la revendication 2, **caractérisé en ce qu'**une surface de séparation (14) séparant les parties (64, 66) d'élément de retenue coïncide avec la surface de séparation (14) des parties (16) d'élément d'étanchéité.

4. Passe-câble selon l'une quelconque des revendications précédentes, **caractérisé en ce que** les parties (64, 66) d'élément de retenue peuvent être reliées l'une à l'autre par coopération de formes (74, 76).

5. Passe-câble selon l'une quelconque des revendications précédentes, **caractérisé en ce que** les parties (64, 66) d'élément de retenue d'un élément de retenue (60, 62) sont réalisées en symétrie spéculaire par rapport à un axe médian (36) de l'élément de retenue (60, 62).

6. Passe-câble selon la revendication 5, **caractérisé en ce que** l'axe médian (36) se situe dans la surface de séparation (14).

7. Passe-câble selon l'une quelconque des revendications précédentes, **caractérisé en ce que** les parties (64'a, 64'b) d'élément de retenue sont réalisées en symétrie spéculaire par rapport à un axe transversal (37).

8. Passe-câble selon la revendication 7, **caractérisé en ce que** l'axe transversal (37) se situe dans la surface de séparation (14).

9. Passe-câble selon l'une quelconque des revendications précédentes, **caractérisé en ce qu'**au moins une partie (64, 66) d'élément de retenue est reliée à une partie (16) d'élément d'étanchéité pour former une partie (100) de passe-câble.

10. Passe-câble selon la revendication 9, **caractérisé en ce que** le au moins un élément de retenue (64, 66) est relié à la partie (16) d'élément d'étanchéité par liaison de matière.

11. Passe-câble selon l'une quelconque des revendications précédentes, **caractérisé en ce que** l'élément de retenue (60, 62) agit au moins sur une section du corps de passage (18).

12. Passe-câble selon l'une quelconque des revendications précédentes, **caractérisé en ce que** le au moins un élément de retenue (60, 62) forme des surfaces de support (90, 92) pour un logement (111) du passe-câble (10).

13. Passe-câble selon la revendication 12, **caractérisé en ce que** les surfaces de support (90, 92) sont agencées sur un contour périphérique du moins un élément de retenue (60, 62).

14. Passe-câble selon l'une quelconque des revendications précédentes, **caractérisé en ce que** la surface d'étanchéité extérieure (52) fait le tour de l'élément d'étanchéité élastique (12) de manière fermée.

15. Passe-câble selon l'une quelconque des revendications précédentes, **caractérisé en ce que** la surface d'étanchéité extérieure (52) est agencée sur un support de surface d'étanchéité (50) formé sur le corps de passage (18).

16. Passe-câble selon la revendication 15, **caractérisé en ce que** le support de surface d'étanchéité (50) s'étend dans la direction radiale vers la goulotte de passage de câble (22) en étant situé à l'extérieur par rapport au corps de passage (18).

17. Passe-câble selon la revendication 15 ou 16, **caractérisé en ce que** le support de surface d'étanchéité (50) fait saillie du au moins un élément de retenue (60, 62) dans la direction radiale vers la goulotte de passage de câble (22) par une section extérieure (94) portant la surface d'étanchéité extérieure (52).

18. Passe-câble selon l'une quelconque des revendications précédentes, **caractérisé en ce que** le moins un élément de retenue (60, 62) présentent un contour extérieur qui est adapté à la surface d'étanchéité extérieure (52) de l'élément d'étanchéité (12).

19. Passe-câble selon l'une quelconque des revendications 15 à 18, **caractérisé en ce que** le support de surface d'étanchéité (50) est agencé entre deux surfaces de support (90, 92).

20. Passe-câble selon l'une quelconque des revendications précédentes, **caractérisé en ce que** l'élément d'étanchéité (12) comporte des bagues d'étanchéité (44, 46) portant des surfaces d'étanchéité intérieures (32, 34) pouvant s'appliquer contre la gaine de câble (26).

21. Passe-câble selon la revendication 20, **caractérisé en ce que** l'élément d'étanchéité (12) comprend plusieurs bagues d'étanchéité (44, 46) agencées à distance les unes des autres.

22. Passe-câble selon l'une quelconque des revendications précédentes, **caractérisé en ce que** les parties (16) d'élément d'étanchéité comprennent des creux (102) et/ou des parties saillantes s'imbriquant les uns dans les autres.

23. Passe-câble selon la revendication 22, **caractérisé en ce que** chacune des parties (16) d'élément d'étanchéité comprend au moins un creux (102) et au moins une partie saillante (104).

24. Passe-câble selon l'une quelconque des revendications précédentes, **caractérisé en ce que** les parties (16) d'élément d'étanchéité sont réalisées de telle manière que leur assemblage à l'élément d'étanchéité (12) provoque une déformation du matériau élastique formant les parties (16) d'élément d'étanchéité.

25. Passe-câble selon l'une quelconque des revendications précédentes, **caractérisé en ce que** chaque élément d'étanchéité (12) est composé de parties (16) d'élément d'étanchéité identiques.

26. Passe-câble selon l'une quelconque des revendications précédentes, **caractérisé en ce que** les parties (16) d'élément d'étanchéité sont réalisées en symétrie spéculaire par rapport à un axe médian (36).

27. Passe-câble selon l'une quelconque des revendications précédentes, **caractérisé en ce que** les parties (16) d'élément d'étanchéité sont réalisées en symétrie spéculaire par rapport à un axe transversal (37).

28. Passe-câble selon l'une quelconque des revendications précédentes, **caractérisé en ce que** les parties (16) d'élément d'étanchéité peuvent être reliées les unes aux autres par coopération de formes.

29. Passe-câble selon l'une quelconque des revendications précédentes, **caractérisé en ce que** chaque élément de retenue (60, 62) est composé de parties (64, 66) d'élément de retenue identiques.

30. Passe-câble selon la revendication 29, **caractérisé en ce que** les deux éléments de retenue (60, 62) du passe-câble (10) sont composés de parties (64, 66) d'élément de retenue identiques.

31. Passe-câble selon l'une quelconque des revendications précédentes, **caractérisé en ce que** les parties (16) d'élément d'étanchéité sont réalisées de manière identique.

32. Passe-câble selon l'une quelconque des revendications 9 à 31, **caractérisé en ce que** les parties (100) de passe-câble sont réalisées de manière identique.

33. Système de passe-câble, **caractérisé en ce que** celui-ci comprend un cadre (112) dans lequel au moins un passe-câble (10) selon l'une quelconque des revendications précédentes est introduit, qui repose de manière étanche au moins en partie contre le cadre (112) par sa surface d'étanchéité extérieure (52).

34. Système de passe-câble selon la revendication 33, **caractérisé en ce que** le au moins un passe-câble (10) peut être fixé dans le cadre (112') au moyen d'une partie saillante de positionnement (128) s'insérant dans un orifice de positionnement (126).

35. Système de passe-câble selon la revendication 33 ou 34, **caractérisé en ce que** plusieurs passe-câble (10) selon l'une quelconque des revendications 1 à 27 sont introduits dans le cadre (112).

36. Système de passe-câble selon l'une quelconque des revendications 33 à 35, **caractérisé en ce qu'**au moins un des passe-câble (10) repose par sa surface d'étanchéité extérieure (52) en partie contre le cadre (112) et en partie contre les surfaces d'étanchéité extérieures (52) d'autres passe-câble (10).

37. Système de passe-câble selon l'une quelconque des revendications 35 ou 36, **caractérisé en ce que** les surfaces de séparation (14) de passe-câble (10) situés les uns à côté des autres s'étendent transversalement les unes aux autres.
